# EUROPÄISCHE PATENTSCHRIFT

(11) **EP 3 711 983 B1**
(45) Veröffentlichungstag und Bekanntmachung des Hinweises auf die Patenterteilung: **23.08.2023**
(21) Anmeldenummer: 20159399.3
(22) Anmeldetag: 25.02.2020
(51) Int. Cl.: B60H 1/00, B60H 1/14, B60H 1/32

(54) **WÄRMESYSTEM FÜR EIN ELEKTRO- ODER HYBRIDFAHRZEUG, ELEKTRO- ODER HYBRIDFAHRZEUG, VERFAHREN ZUM BETRIEB EINES WÄRMESYSTEMS**
HEAT SYSTEM FOR ELECTRIC OR HYBRID VEHICLE, ELECTRIC OR HYBRID VEHICLE, METHOD FOR OPERATING A HEAT SYSTEM
SYSTÈME DE CHAUFFAGE POUR UN VÉHICULE ÉLECTRIQUE OU HYBRIDE, VÉHICULE ÉLECTRIQUE OU HYBRIDE, PROCÉDÉ DE FONCTIONNEMENT D'UN SYSTÈME DE CHAUFFAGE

(30) Priorität: 20.03.2019 DE 102019107191
(43) Veröffentlichungstag der Anmeldung: 23.09.2020
(73) Patentinhaber: Bayerische Motoren Werke Aktiengesellschaft, 80809 München (DE)
(72) Erfinder: Horn, Oliver, 81475 Muenchen (DE); Moser, Markus, 85764 Oberschleißheim (DE); Allgaeuer, Christian, 81825 München (DE)

(56) Entgegenhaltungen:
- DE-A1-102017 206 180
- US-A1- 2016 107 505
- US-A1- 2019 070 924

## Beschreibung

Die Erfindung betrifft ein Wärmesystem für ein Elektro- oder Hybridfahrzeug sowie ein entsprechendes Fahrzeug mit einem solchen Wärmesystem. Weiter betrifft die Erfindung ein Verfahren zum Betrieb des Wärmesystems.

Ein Elektro- oder Hybridfahrzeug, kurz Fahrzeug, weist zur Fortbewegung einen elektrischen Antriebsstrang auf, welcher von einem Hochvoltspeicher mit elektrischer Energie versorgt wird. Der Hochvoltspeicher ist ebenfalls ein Bestandteil des Fahrzeugs und wird alternativ auch als Elektrospeicher oder als Batterie bezeichnet. Um den Antriebsstrang hinreichend zu versorgen, ist der Hochvoltspeicher entsprechend dimensioniert. Für einen optimalen Betrieb des Fahrzeugs ist die Temperierung des Hochvoltspeichers von besonderer Bedeutung. Zur Temperierung ist der Hochvoltspeicher beispielsweise in ein Wärmesystem des Fahrzeugs eingebunden. Das Wärmesystem dient regelmäßig der Durchführung diverser Temperierungsaufgaben im Fahrzeug, d.h. der Zufuhr oder Abfuhr von Wärme von diversen Fahrzeugkomponenten, welche hierzu an das Wärmesystem angeschlossen sind.

In der DE 10 2015 220 623 A1 ist ein Wärmesystem beschrieben, bei welchem ein Hochvoltspeicher gemeinsam mit einem Chiller in einem HVS-Kreis angeordnet ist. In einem ersten HVS-Kühlbetrieb ist der HVS-Kreis von einem Kühlkreis getrennt, sodass Wärme vom Hochvoltspeicher über den Chiller in einen Kältekreis abgeführt wird. In einem zweiten HVS-Kühlbetrieb dagegen ist der HVS-Kreis mit dem Kühlkreis verbunden, sodass Wärme vom Hochvoltspeicher unter Umgehung des Chillers über einen Kühler im Kühlkreis an die Umgebung abgeführt wird. Eine Beheizung des Hochvoltspeichers ist in einem HVS-Heizbetrieb dadurch realisiert, dass der HVS-Kreis mit einem Heizkreis verbindbar ist, in welchem ein Zuheizer angeordnet ist. Der Zuheizer dient eigentlich zur bedarfsweisen Wärmezufuhr in den Heizkreis zwecks Innenraumbeheizung, kann aber durch eine direkte Verbindung des Heizkreises mit dem HVS-Kreis auch zur Beheizung des Hochvoltspeichers verwendet werden. Hierzu ist eine Querverbindung ausgebildet, welche den Heizkreis stromab des Zuheizers mit dem HVS-Kreis stromauf des Hochvoltspeichers verbindet.

In der unveröffentlichten, deutschen Patentanmeldung Nr. 10 2017 220 376 ist ein Kühlsystem beschrieben, ebenfalls mit einem HVS-Kreis, mit einem Hochvoltspeicher und einem Chiller, sowie weiter mit einem Kühlkreis, mit einem Kühler. In einem ersten Betrieb ist der HVS-Kreis vom Kühlkreis fluidisch getrennt und eine Wärmeabfuhr vom Hochvoltspeicher erfolgt über den Chiller in einen Kältekreis. In einem zweiten Betrieb sind dagegen der HVS-Kreis und der Kühlkreis derart verbunden, dass der Hochvoltspeicher, der Chiller und der Kühler in Serie geschaltet sind und Wärme vom Hochvoltspeicher über diese beiden Komponenten abführbar ist. In einem dritten Betrieb sind gegenüber dem zweiten Betrieb eine Wärmequelle, der Chiller und der Kühler in Serie geschaltet, sodass Wärme von der Wärmequelle über den Chiller und den Kühler abführbar ist, während der Hochvoltspeicher nicht durchströmt wird und mit diesem somit kein Wärmetausch erfolgt.

Weitere Wärmesysteme werden gezeigt in US 2019/070924 A1, US 2016/107505 A1 und DE 10 2017 206180 A1.

Vor diesem Hintergrund ist es eine Aufgabe der Erfindung, ein verbessertes Wärmesystem anzugeben. Weiter sollen ein Elektro- oder Hybridfahrzeug mit einem solchen Wärmesystem sowie ein Verfahren zum Betrieb des Wärmesystems angegeben werden. Mittels des Wärmesystems soll insbesondere eine möglichst effiziente Temperierung eines Hochvoltspeichers des Elektro- oder Hybridfahrzeugs erzielt werden. Insbesondere soll das Wärmesystem mit einem möglichst geringen konstruktiven Aufwand eine möglichst große Anzahl an Betriebsmodi ermöglichen.

Die Aufgabe wird erfindungsgemäß gelöst durch ein Wärmesystem mit den Merkmalen gemäß Anspruch 1. Weiter wird die Aufgabe gelöst durch ein Elektro- oder Hybridfahrzeug mit den Merkmalen gemäß Anspruch 15 sowie durch ein Verfahren mit den Merkmalen gemäß Anspruch 16. Vorteilhafte Ausgestaltungen, Weiterbildungen und Varianten sind Gegenstand der Unteransprüche. Die Ausführungen im Zusammenhang mit dem Wärmesystem gelten sinngemäß auch für das Elektro- oder Hybridfahrzeug sowie für das Verfahren und umgekehrt.

Das Wärmesystem ist ausgebildet zur Verwendung in einem Elektro- oder Hybridfahrzeug. Das Elektro- oder Hybridfahrzeug wird abkürzend auch lediglich als Fahrzeug bezeichnet. Das Wärmesystem weist einen Gesamtkühlkreis auf sowie einen Kältekreis. Weiter weist das Wärmesystem mehrere Schaltzustände auf. Der Gesamtkühlkreis weist einen Kühlkreis auf, an welchen eine Wärmequelle des Elektro- oder Hybridfahrzeugs angeschlossen ist. Der Gesamtkühlkreis weist weiterhin einen HVS-Kreis auf, an welchen ein Hochvoltspeicher angeschlossen ist, zur Versorgung eines elektrischen Antriebsstrangs des Elektro- oder Hybridfahrzeugs. An den Kühlkreis ist stromab der Wärmequelle ein erster Umgebungskühler angeschlossen, zum Wärmetausch mit der Umgebung. An den HVS-Kreis ist ein Chiller angeschlossen, welcher auch an den Kältekreis angeschlossen ist, zur Wärmeübertragung vom HVS-Kreis in den Kältekreis. Bei dem Wärmesystem ist ein erster Schaltzustand einstellbar, in welchem der HVS-Kreis stromab und stromauf der Wärmequelle mit dem Kühlkreis verbunden ist, sodass ein erweiterter HVS-Kreis ausgebildet ist, in welchem der Hochvoltspeicher und die Wärmequelle in Serie geschaltet sind, zur Beheizung des Hochvoltspeichers mittels der Wärmequelle und zugleich insbesondere auch zur Kühlung der Wärmequelle.

Da das Wärmesystem mehrere Schaltzustände aufweist, ist wenigstens ein weiterer Schaltzustand einstellbar, in welchem der Hochvoltspeicher und die Wärmequelle insbesondere nicht in Serie geschaltet sind, vorzugsweise indem der HVS-Kreis und der Kühlkreis voneinander getrennt sind oder indem der HVS-Kreis und der Kühlkreis derart miteinander verbunden sind, dass der Hochvoltspeicher parallel zur Wärmequelle geschaltet ist.

Der erste Schaltzustand ist durch eine Serienschaltung von dem Hochvoltspeicher, der Wärmequelle und insbesondere auch dem Chiller gekennzeichnet. Ein wesentlicher Vorteil dieses ersten Schaltzustands ist, dass der Hochvoltspeicher mit Wärme beheizbar ist, welche im Betrieb der Wärmequelle durch diese automatisch erzeugt wird. Statt diese Abwärme z.B. an die Umgebung abzuführen, wird die Abwärme zur Beheizung des Hochvoltspeichers genutzt. Dadurch wird insbesondere elektrische Energie eingespart, welche ansonsten z.B. zum Betrieb eines elektrischen Heizelements zur Beheizung des Hochvoltspeichers aufgewendet werden müsste und nicht mehr für den Antrieb zur Verfügung stünde. Eine separate Zuheizung, z.B. mittels eines elektrischen Heizelements, ist zunächst nicht notwendig und entfällt vorteilhafterweise. Zugleich ermöglicht die spezielle Verschaltung des Wärmesystems in Verbindung mit der Möglichkeit, noch wenigstens einen weiteren Schaltzustand einzustellen, verschiedene Betriebsmodi für das Wärmesystem und somit ein besonders flexibles Wärmemanagement.

Die vorgenannte Serienschaltung aus Hochvoltspeicher, Wärmequelle und Chiller stellt zudem einen wesentlichen Unterschied zur eingangs erwähnten, unveröffentlichten deutschen Patentanmeldung Nr. 10 2017 220 376 dar, in welcher eine Verbindung des HVS-Kreises und des Kühlkreises lediglich stromab der Wärmequelle realisiert ist, nicht aber zusätzlich stromauf der Wärmequelle, sodass eine Nutzung der Abwärme der Wärmequelle zur Beheizung des Hochvoltspeichers nicht möglich ist. Auch in der ebenfalls eingangs zitierten DE 10 2015 220 623 A1 ist keine Serienschaltung von Hochvoltspeicher und Wärmequelle möglich, vielmehr wird dort ausschließlich eine Parallelschaltung realisiert.

Der Gesamtkühlkreis ist zur Zirkulation eines Kühlmittels ausgebildet und weist hierzu insbesondere entsprechende Leitungen sowie zumindest eine Pumpe auf. Das Kühlmittel ist vorzugsweise ein Wasser/Glykol-Gemisch. Der Kühlkreis und der HVS-Kreis bilden jeweils eine Untereinheit des Gesamtkühlkreises und sämtliche Bestandteile des Kühlkreises und des HVS-Kreises sind auch Bestandteile des Gesamtkühlkreises. Der Gesamtkühlkreis, der Kühlkreis und der HVS-Kreis werden jeweils auch kurz als "Kreis" bezeichnet.

Der Kältekreis ist zur Zirkulation eines Kältemittels ausgebildet. Der Gesamtkühlkreis und der Kältekreis sind fluidisch voneinander getrennt. Der Kältekreis weist insbesondere einen Verdichter auf, zur Verdichtung des Kältemittels, einen oder mehrere Verdampfer, zur Wärmeaufnahme in den Kältekreis, sowie einen oder mehrere Kondensatoren, zur Wärmeabgabe aus dem Kältekreis. Wenigstens einem Verdampfer, üblicherweise allen Verdampfern, ist ein Expansionsventil vorgeschaltet, zur Entspannung des Kältemittels. Der Chiller, welcher sowohl an den Gesamtkühlkreis als auch an den Kältekreis angeschlossen ist, ist im Kältekreis ein Verdampfer, nimmt also Wärme vom Kühlmittel auf und übergibt diese an das Kältemittel. Die Menge an Wärme, welche vom Chiller in den Kältekreis übertragen wird, wird vorzugsweise durch eine entsprechende Steuerung eines Expansionsventils erzielt, welches dem Chiller im Kältekreis vorgeschaltet ist, sowie insbesondere auch des Verdichters. Durch vollständiges Schließen des Expansionsventils ist der Chiller deaktivierbar und überträgt dann keine Wärme. Durch Öffnen des Expansionsventils ist der Chiller aktvierbar. Das Expansionsventil vor dem Chiller wird vorzugsweise abhängig vom Saugdruck und insbesondere auch der Temperatur des Kältemittels stromauf des Verdichters geregelt. Der Saugdruck wird insbesondere mittels eines entsprechenden Druck- und Temperatursensors gemessen. Die Überwachung des Verdichters erfolgt vorzugsweise abhängig von Druck und Temperatur des Kältemittels stromab des Verdichters, d.h. abhängig vom Hochdruck und der Heißgastemperatur. Der Hochdruck und die Heißgastemperatur werden insbesondere mittels eines Druck- und Temperatursensors stromab des Verdichters gemessen. Eine Regelung des Verdichters erfolgt vorzugsweise abhängig von einer Kühlanforderung für den Innenraum oder für den Hochvoltspeicher, wobei als Regelgröße eine entsprechende Temperatur verwendet wird.

Der Chiller ist in einer Variante mehrteilig ausgebildet, weist also wenigstens zwei Chillereinheiten auf, welche im HVS-Kreis parallel zueinander oder in Serie geschaltet sind und insgesamt vorzugsweise wie ein einzelner Chiller wirken. Die Unterteilung in mehrere Chillereinheiten hat jedoch insbesondere den Vorteil, dass jede Chillereinheit an einen separaten Kältekreis angeschlossen werden kann und in einer Ausgestaltung auch angeschlossen ist. Die Kältekreise können dadurch vorteilhaft geringer dimensioniert werden, insbesondere hinsichtlich der Leistung des jeweiligen Verdichters. Zunächst wird nur mittels einer einzelnen Chillereinheit Wärme abgeführt, bei entsprechendem Bedarf wird dann ein weiterer Kältekreis mit der zugehörigen Chillereinheit aktiviert und sozusagen hinzugeschaltet. Zudem kann bei mehreren Kältekreisen auch die Wärmeabfuhr aus diesen unterschiedlich und bedarfsgerecht realisiert werden.

Weitere geeignete Varianten des Kältekreises ergeben sich in Kombination mit einem oder mehreren inneren Wärmetauschern. Ein jeweiliger innerer Wärmetauscher dient der thermischen Kopplung eine Niederdruckleitung des Kältekreises mit einer Hochdruckleitung des Kältekreises und führt zu einer Effizienz- und Leistungssteigerung. Bei mehreren zueinander parallel geschalteten Verdampfern im Kältekreis ist eine Ausgestaltung geeignet, bei welcher entsprechend für jeden der Verdampfer ein innerer Wärmetauscher vorhanden ist.

Wärme, welche in den Kältekreis übertragen wird, wird zweckmäßigerweise mittels eines Kondensators abgeführt. Der Kondensator gibt Wärme z.B. an die Umgebung ab oder an einen separaten Kondensator-Kühlkreis. besonders zweckmäßig ist jedoch eine Ausgestaltung, bei welcher der Kondensator an den Gesamtkühlkreis angeschlossen ist, um die Wärme, welche vom Chiller abgeführt wird, an anderer Stelle wieder dem Gesamtkühlkreis zuzuführen und dort vorteilhaft zur Beheizung zu nutzen oder an die Umgebung abzugeben. Speziell für Letzteres ist es zweckmäßig, wenn der Kondensator mit dem ersten Umgebungswärmetauscher in Serie geschaltet ist.

Das Wärmesystem dient insgesamt dazu, diverse Temperierungsanforderungen von Komponenten des Fahrzeugs zu bedienen. Unter "Temperierung" wird eine Kühlung oder eine Beheizung verstanden. Komponenten des Fahrzeugs werden auch als "Fahrzeugkomponenten" bezeichnet. Das Wärmesystem dient zum Wärmetausch mit den Fahrzeugkomponenten, welche hierzu an den Gesamtkühlkreis oder den Kältekreis angeschlossen sind. Dabei wird nachfolgend vereinfachend die Formulierung verwendet, dass eine jeweilige Fahrzeugkomponente an den Gesamtkühlkreis oder den Kältekreis "angeschlossen" oder in diesem "angeordnet" sei, womit insbesondere gemeint ist, dass die Fahrzeugkomponenten mit einem geeigneten Wärmetauscher verbunden oder ausgestattet ist und dieser Wärmetauscher dann an den Gesamtkühlkreis bzw. den Kältekreis angeschlossen ist und zur Temperierung der fraglichen Fahrzeugkomponente vom Kühlmittel bzw. Kältemittel durchströmt wird, sodass ein Wärmetausch mit der Fahrzeugkomponente erfolgt.

Weiter weist das Wärmesystem mehrere Schaltzustände auf, welche sich gegenseitig insbesondere ausschließen. In jedem Schaltzustand sind ein oder mehrere Betriebsmodi realisierbar. Ein jeweiliger Betriebsmodus wird eingestellt, um eine bestimmte Komponente zu Temperieren. Um mehrere Komponenten gleichzeitig zu temperieren, werden die entsprechenden Betriebsmodi gleichzeitig eingestellt. Welche Betriebsmodi zu einem gegebenen Zeitpunkt einstellbar sind, d.h. welche Temperierungsanforderungen zu einem gegebenen Zeitpunkt erfüllbar sind, hängt vom aktuellen Schaltzustand des Wärmesystems ab. Das Einstellen eines Schaltzustands und ggf. eines oder mehrerer Betriebsmodi, erfolgt insbesondere mittels einer Steuereinheit, welche im Betrieb des Wärmesystems einen jeweiligen Schaltzustand oder Betriebszustand einstellt. Die Steuereinheit ist ausgebildet, zwischen verschiedenen Schaltzuständen umzuschalten und einen oder mehrere Betriebsmodi einzustellen, d.h. insbesondere einzuschalten oder auszuschalten. Hierzu ist die Steuereinheit insbesondere mit entsprechenden Stellgliedern, Pumpen Komponenten oder sonstigen Bestandteilen des Wärmesystems verbunden und steuert. Der Begriff "steuern" umfasst als Spezialfall auch "regeln". Die Steuereinheit ist vorzugsweise ein Teil des Wärmesystems. Alternativ oder zusätzlich wird das Wärmesystem durch eine externe Steuereinheit gesteuert.

Die Wärmequelle ist eine Fahrzeugkomponente. Allgemein erzeugt die Wärmequelle im Betrieb Abwärme, welche durch das Wärmesystem abgeführt wird. In einer bevorzugten Ausgestaltung ist die Wärmequelle eine Leistungselektronik, eine E-Maschine, ein Verbrennungsmotor, eine Heckentlüftung oder dergleichen. Die Leistungselektronik steuert insbesondere die Versorgung der E-Maschine mit elektrischer Energie aus dem Hochvoltspeicher des Fahrzeugs. Die E-Maschine dient insbesondere zum Antrieb des Fahrzeugs. In einer Variante wird die E-Maschine auch als Generator genutzt, z.B. zur Rekuperation und zum Laden des Hochvoltspeichers. Sofern vorhanden, dient Verbrennungsmotor insbesondere zum nicht-elektrischen Antrieb des Fahrzeugs oder als Range Extender. Die E-Maschine und die Leistungselektronik sind insbesondere Teile eines elektrischen Antriebsstrangs des Fahrzeugs. Die Wärmequelle ist nicht notwendigerweise eine einzelne Fahrzeugkomponente, sondern alternativ eine Kombination mehrerer Fahrzeugkomponenten, welche im Kühlkreis parallel oder seriell zueinander verschaltet sind oder eine Kombination hiervon.

Der erste Umgebungskühler dient dem Wärmetausch mit der Umgebung und ist insbesondere ein Luft/Kühlmittel-Wärmetauscher. Der erste Umgebungskühler ist in einem Umgebungsluftpfad angeordnet und wird im Betrieb regelmäßig mit Umgebungsluft beaufschlagt, im Fahrbetrieb des Fahrzeugs speziell durch Fahrtwind. Vorzugsweise ist im Umgebungsluftpfad insbesondere stromab des ersten Umgebungskühlers ein Lüfter angeordnet, zum Ansaugen von Umgebungsluft. Im Umgebungsluftpfad stromauf des ersten Umgebungskühlers ist geeigneterweise eine Anzahl von Luftklappen angeordnet, zur Steuerung der Zufuhr von Umgebungsluft in den Umgebungsluftpfad. Der Lüfter und die Luftklappen werden insbesondere von der Steuereinheit gesteuert, um das Ausmaß des Wärmetauschs mit der Umgebung einzustellen.

Der Hochvoltspeicher dient der Versorgung des elektrischen Antriebs des Fahrzeugs mit elektrischer Energie und ist hierfür entsprechend ausgebildet. Üblicherweise weist der Hochvoltspeicher eine Vielzahl von Zellen auf, welche miteinander elektrisch verschaltet sind. Zusätzlich ist es insbesondere auch möglich, dem Hochvoltspeicher elektrische Energie zur Versorgung anderer Fahrzeugkomponenten zu entnehmen. Der Hochvoltspeicher wird alternativ auch als Elektrospeicher oder als Batterie bezeichnet.

Der erste Umgebungskühler und die Wärmequelle sind in insbesondere jeglichem Schaltzustand des Wärmesystems zueinander in Serie geschaltet. Ebenso sind der Hochvoltspeicher und der Chiller insbesondere in jeglichem Schaltzustand des Wärmesystems zueinander in Serie geschaltet.

Im Kühlkreis ist zweckmäßigerweise eine Kühlkreispumpe angeordnet, zur Förderung oder Umwälzung des Kühlmittels im Kühlkreis. Die KühlkreisPumpe ist vorzugsweise stromab des ersten Umgebungskühlers und stromauf der Wärmequelle angeordnet. Besonders vorteilhaft ist eine Positionierung der Kühlkreispumpe an derjenigen Stelle des Kühlkreises, an welcher das Kühlmittel die geringste Temperatur aufweist. Dadurch werden insbesondere Kavitationen vermieden und eine verbesserte Effizienz und längere Lebensdauer der Kühlkreispumpe gewährleistet. Eine andere Positionierung kann jedoch z.B. aus bauraumtechnischen oder geometrischen Gründen ebenfalls vorteilhaft sein.

Entsprechend ist im HVS-Kreis zweckmäßigerweise eine HVS-Pumpe angeordnet, zur Förderung oder Umwälzung des Kühlmittels im HVS-Kreis. Die HVS-Pumpe ist vorzugsweise stromab des Chillers und stromauf des Hochvoltspeichers angeordnet. Die HVS-Pumpe und die Kühlkreispumpe werden allgemein auch jeweils als "Pumpe" bezeichnet. Die beiden Pumpen sind unabhängig voneinander steuerbar. Durch geeignetes Aktivieren und Deaktivieren der beiden Pumpen sind in Kombination mit den diversen Schaltzuständen diverse Betriebsmodi einstellbar.

Wie bereits beschrieben sind im ersten Schaltzustand der Hochvoltspeicher, und die Wärmequelle zueinander in Serie geschaltet. Dadurch wird als ein Betriebsmodus ein erster HVS-Heizbetrieb ermöglicht, bei welchem der Hochvoltspeicher mittels der Wärmequelle beheizt wird. Hierzu ist im ersten HVS-Heizbetrieb die HVS-Pumpe aktiviert, die Kühlkreispumpe ist jedoch deaktiviert, sodass lediglich im erweiterten HVS-Kreis Kühlmittel umgewälzt wird. Der erste HVS-Heizbetrieb ist zugleich auch ein Kühlbetrieb für die Wärmequelle. Eine Beheizung des Hochvoltspeichers ist besonders sinnvoll bei niedrigen Außentemperaturen, z.B. im Winter, und allgemein dann, wenn der Hochvoltspeicher auf eine bestimmte Betriebstemperatur gebracht werden soll. Bei entsprechendem Bedarf wird der erste HVS-Heizbetrieb dann eingestellt und hierzu die HVS-Pumpe aktiviert. Der Chiller und die Kühlkreispumpe werden dagegen deaktiviert. In einer Variante sind der Chiller oder die Kühlkreispumpe oder beide jedoch aktiviert, um überschüssige Wärme aus dem HVS-Kreis abzuführen, z.B. falls die Wärmequelle mehr Wärme generiert, als zur Beheizung des Hochvoltspeichers benötigt wird, oder falls Wärme zur Innenraumbeheizung benötigt wird.

Zur Realisierung der Serienschaltung ist in einer geeigneten Ausgestaltung der HVS-Kreis stromauf der Wärmequelle mittels einer ersten Verbindungsleitung an den Kühlkreis angeschlossen und stromab der Wärmequelle mittels einer zweiten Verbindungsleitung. Dabei ist die erste Verbindungsleitung an einem ersten Anschlusspunkt an den HVS-Kreis angeschlossen und an einem zweiten Anschlusspunkt an den Kühlkreis. Die zweite Verbindungsleitung ist an einem dritten Anschlusspunkt an den HVS-Kreis angeschlossen und an einem vierten Anschlusspunkt an den Kühlkreis. Der erste Anschlusspunkt und der dritte Anschlusspunkt sind im HVS-Kreis beide stromab des Hochvoltspeichers und stromauf des Chillers angeordnet, wobei der dritte Anschlusspunkt stromab des ersten Anschlusspunkts angeordnet ist. Der zweite Anschlusspunkt ist im Kühlkreis stromauf der Wärmequelle angeordnet und zweckmäßigerweise stromab des ersten Umgebungskühlers. Der vierte Anschlusspunkt ist im Kühlkreis stromab der Wärmequelle angeordnet und zweckmäßigerweise stromauf des Umgebungskühlers.

Im ersten HVS-Heizbetrieb strömt das Kühlmittel vom Hochvoltspeicher zum ersten Anschlusspunkt und über die erste Verbindungsleitung zur Wärmequelle, von dort über die zweite Verbindungsleitung zum dritten Anschlusspunkt und zum Chiller und schließlich wieder zum Hochvoltspeicher. Durch diese Einbindung der Wärmequelle mittels der beiden Verbindungsleitungen ist im ersten HVS-Heizbetrieb sozusagen ein erweiterter HVS-Kreis ausgebildet. Der erweiterte HVS-Kreis unterscheidet sich vom HVS-Kreis dadurch, dass der HVS-Kreis einen Leitungsabschnitt aufweist, welcher sich zwischen dem ersten und dem dritten Anschlusspunkt erstreckt, und dass der erweiterte HVS-Kreis anstelle dieses Leitungsabschnitts die beiden Verbindungsleitungen und einen dazwischen liegenden Leitungsabschnitt des Kühlkreises umfasst.

Die Serienschaltung von Hochvoltspeicher und Wärmequelle ist bei dem vorliegenden Wärmesystem jedoch zweckmäßigerweise nicht fest, sondern wird in anderen Schaltzuständen zugunsten anderer Betriebsmodi aufgegeben. Entsprechend existiert vorzugsweise wenigstens ein Schaltzustand, in welchem der Hochvoltspeicher und die Wärmequelle nicht in Serie geschaltet sind. Stattdessen sind der HVS-Kreis und der Kühlkreis in einer ersten Variante voneinander getrennt, sodass in dem entsprechenden Schaltzustand kein Austausch von Kühlmittel zwischen den beiden Kreisen erfolgt und diese sozusagen autark betreibbar sind. In einer zweiten Variante sind der HVS-Kreis und der Kühlkreis derart miteinander verbunden sind, dass der Hochvoltspeicher parallel zur Wärmequelle geschaltet ist, also an unterschiedliche Teilzweige des Gesamtkühlkreises angeschlossen sind.

Unter einer Verschaltung zweier Komponenten "in Serie" wird allgemein verstanden, dass die eine Komponente bezüglich einer Strömungsrichtung des Kühlmittels stromauf oder stromab der anderen Komponente angeordnet ist, dass also das Kühlmittel nacheinander beide Komponenten durchströmt. Demgegenüber wird unter einer "parallelen" Verschaltung zweier Komponenten allgemein verstanden, dass in einem Kreis zwei Verzweigungen ausgebildet sind, wobei an der einen Verzweigung das Kühlmittel auf zwei Teilzweige aufgeteilt wird und an der anderen Verzweigung wieder zusammengeführt wird, sodass die beiden Komponenten, welche auf unterschiedlichen Teilzweigen angeordnet sind, parallel von Kühlmittel durchströmt werden. Analoges gilt für in Serie oder parallel geschaltete Kreise, Zweige und dergleichen.

Die diversen Kreise des Gesamtkühlkreises sind grundsätzlich über eine Anzahl von Leitungen miteinander fluidisch, d.h. hydraulisch, verbunden, sodass je nach Betriebsmodus ein Austausch von Kühlmittel zwischen verschiedenen der Kreise erfolgt. Unter "getrennt" wird dann insbesondere verstanden, dass im entsprechenden Schaltzustand der jeweilige Kreis lediglich abgesperrt wird, insbesondere mittels eines geeigneten Stellglieds, sodass kein Austausch von Kühlmittel zwischen dem getrennten Kreis und den übrigen Kreisen erfolgt. Nichtsdestoweniger besteht aber grundsätzlich eine Verbindung über entsprechende Leitungen. Unter "verbunden" wird dann üblicherweise insbesondere verstanden, dass im entsprechenden Schaltzustand ein Kühlmittelaustausch zwischen zwei entsprechenden Kreisen möglich ist und im Betrieb auch erfolgt. Ein Verbinden und Trennen, erfolgt insbesondere mittels geeigneter Stellglieder, welche zwei Kreise gegeneinander absperren oder zwecks Kühlmittelaustauschs verbinden. Anstelle der Begriffe "verbunden" und "getrennt" werden auch die Begriffe "gekoppelt" bzw. "entkoppelt" verwendet.

In einer vorteilhaften Ausgestaltung ist der erste Schaltzustand mittels eines ersten Stellglieds einstellbar ist, welches im HVS-Kreis stromab des Hochvoltspeichers angeordnet ist und welches zwei Schaltstellungen aufweist, nämlich eine erste Schaltstellung, in welcher der HVS-Kreis stromauf der Wärmequelle mit dem Kühlkreis insbesondere über die erste Verbindungsleitung verbunden ist, zur Einstellung des ersten Schaltzustands, und eine zweite Schaltstellung, in welcher der HVS-Kreis vom Kühlkreis getrennt ist oder mit diesem stromab der Wärmequelle verbunden ist, sodass insbesondere ein anderer Schaltzustand eingestellt ist. Insbesondere ist das erste Stellglied lediglich im ersten Schaltzustand in der ersten Schaltstellung eingestellt und in allen anderen Schaltzuständen in der zweiten Schaltstellung.

Das erste Stellglied ist insbesondere ein Ventil. Das erste Stellglied ist vorzugsweise im HVS-Kreis angeordnet und weist einen Eingang auf, welcher stromab des Hochvoltspeichers angeordnet ist und einen ersten Ausgang, welcher stromauf der Wärmequelle an den Kühlkreis angeschlossen ist, insbesondere über die erste Verbindungsleitung. Weiter weist das Stellglied einen zweiten Ausgang auf, welcher insbesondere zur zweiten Verbindungsleitung führt und insbesondere stromauf des Chillers angeordnet ist. Das Kühlmittel strömt demnach je nach Schaltstellung entweder über den ersten Ausgang zunächst zur Wärmequelle und danach zum Chiller oder über den zweiten Ausgang gerade nicht zur Wärmequelle, sondern z.B. zum Chiller oder zum Kühlkreis stromab der Wärmequelle. Insbesondere ist somit ausgehend vom oben beschriebenen erweiterten HVS-Kreis in der zweiten Schaltstellung ein Bypass ausgebildet, zur Umgehung der Wärmequelle. In einer zweckmäßigen Ausgestaltung bildet das erste Stellglied den ersten Anschlusspunkt. Das erste Stellglied ist in einer geeigneten Ausgestaltung als 3/2-Wegeventil ausgebildet.

Für den Fall, dass zur Beheizung des Hochvoltspeichers die Wärmequelle zu wenig Abwärme erzeugt wird zweckmäßigerweise im ersten Schaltzustand ein Vertrimmungsbetrieb eingestellt. In einer vorteilhaften Ausgestaltung ist hierzu die Wärmequelle eine Komponente eines elektrischen Antriebsstrangs des Elektro- oder Hybridfahrzeugs und die Komponente ist ausgebildet, durch eine Vertrimmung zusätzliche Wärme zu erzeugen, zum Beheizen des Hochvoltspeichers im ersten Schaltzustand. Unter "Vertrimmung" wird insbesondere verstanden, dass die Wärmequelle mit reduzierter Effizienz und somit nicht optimal betreibbar ist und im Vertrimmungsbetrieb entsprechend betrieben wird. Mit anderen Worten: durch eine Vertrimmung der Wärmequelle wird diese gezielt ineffektiv betrieben, um mehr Abwärme zur Beheizung des Hochvoltspeichers zu erzeugen als ohne Vertrimmung. Ganz besonders geeignet zur Vertrimmung ist die E-Maschine zum Antrieb des Fahrzeugs. Eine Vertrimmung ist vorteilhaft auch in einem Standbetrieb des Fahrzeugs möglich, das Fahrzeug muss also hierzu nicht zwingend in Bewegung sein.

Für den umgekehrten Fall, dass die Wärmequelle mehr Abwärme erzeugt, als zur Beheizung des Hochvoltspeichers benötigt wird, und falls zusätzlich eine Heizanforderung für den Innenraum des Fahrzeugs vorliegt, wird zweckmäßigerweise der Chiller aktiviert und mittels diesem ein entsprechender Wärmeüberschuss von dem erweiterten HVS-Kreis in den Kältekreis übertragen. Ansonsten wird die Wärme vorzugsweise an die Umgebung abgegeben und der Kältekreis deaktiviert, wodurch entsprechend Energie eingespart wird.

In einer vorteilhaften Ausgestaltung ist als ein weiterer Schaltzustand ein dritter Schaltzustand einstellbar, in welchem der HVS-Kreis und der Kühlkreis voneinander getrennt sind, sodass der Chiller vom Kühlkreis getrennt ist und sodass der erste Umgebungskühler vom HVS-Kreis getrennt ist, zur Temperierung der Wärmequelle und des Hochvoltspeichers unabhängig voneinander. Der dritte Schaltzustand bietet aufgrund der Trennung von HVS-Kreis und Kühlkreis die Möglichkeit, für den Hochvoltspeicher und die Wärmequelle unabhängig voneinander diverse Betriebsmodi auszuwählen und einzustellen. Mögliche und vorteilhafte Betriebsmodi sind insbesondere: ein zweiter HVS-Kühlbetrieb, ein Homogenisierungsbetrieb, ein zweiter HVS-Heizbetrieb, zweiter Wärmequellen-Kühlbetrieb.

Im zweiten HVS-Kühlbetrieb wird der Chiller aktiviert und Kühlmittel wird im HVS-Kreis gefördert, insbesondere indem die HVS-Pumpe aktiviert wird, sodass der Hochvoltspeicher mittels des Chillers gekühlt wird. Im zweiten HVS-Kühlbetrieb strömt das Kühlmittel insbesondere vom Hochvoltspeicher über den ersten Anschlusspunkt direkt zum dritten Anschlusspunkt und danach zum Chiller und wieder zum Hochvoltspeicher, d.h. nicht über die Wärmequelle wie im erweiterten HVS-Kreis.

Im Homogenisierungsbetrieb wird dagegen der Chiller deaktiviert, aber weiterhin Kühlmittel insbesondere mittels der HVS-Pumpe im HVS-Kreis gefördert, sodass eine Temperaturspreizung innerhalb des Hochvoltspeichers reduziert wird. Der Homogenisierungs-Betrieb unterscheidet sich demnach vom zweiten HVS-Kühlbetrieb lediglich dadurch, dass der Chiller deaktiviert ist, sodass keine Wärmeabfuhr aus dem HVS-Kreis erfolgt, sondern in diesem vielmehr erhalten bleibt. Dadurch wird auf besonders einfache Weise eine vorteilhafte Homogenisierung der Temperaturen der einzelnen Zellen des Hochvoltspeichers erzielt. Der Homogenisierungsbetrieb dient somit zur Homogenisierung der Temperatur innerhalb des Hochvoltspeichers. Der Hochvoltspeicher weist eine Vielzahl von Zellen auf, welche möglicherweise inhomogen temperiert sind und dadurch unterschiedliche Temperaturen aufweisen. Dadurch ergibt sich über den gesamten Hochvoltspeicher betrachtet eine nachteilige Temperaturspreizung, welche durch den Homogenisierungsbetrieb vorteilhaft reduziert wird. Es erfolgt sozusagen eine bezüglich des Hochvoltspeichers interne Umverteilung von Wärme, indem überdurchschnittlich warme Zellen Wärme an das Kühlmittel abgeben und dadurch gekühlt werden und indem dann das Kühlmittel diese Wärme wiederum an unterdurchschnittlich warme Zellen abgibt und diese dadurch beheizt.

Im zweiten HVS-Heizbetrieb wird ein HVS-Zuheizer im HVS-Kreis aktiviert und Kühlmittel im HVS-Kreis insbesondere mittels der HVS-Pumpe gefördert, sodass der Hochvoltspeicher beheizt wird. Hierzu ist in einer vorteilhaften Ausgestaltung im HVS-Kreis stromab des Hochvoltspeichers und stromauf des Chillers ein HVS-Zuheizer angeschlossen, zur Zufuhr von Zusatzwärme in den HVS-Kreis. Der HVS-Zuheizer ist jedoch vorteilhaft auch für andere Temperierungsaufgaben nutzbar, z.B. zur Innenraumbeheizung.

Im zweiten Wärmequellen-Kühlbetrieb wird Abwärme der Wärmequelle über den Kühlkreis abgeführt und beispielsweise über den ersten Umgebungswärmetauscher an die Umgebung abgegeben. Der zweite Wärmequellen-Kühlbetrieb ist vorteilhaft unabhängig vom zweiten HVS-Kühlbetrieb, vom Homogenisierungs-Betrieb und vom zweiten HVS-Heizbetrieb einstellbar, sodass also die Wärmequelle unabhängig von der Temperierungsanforderung bezüglich des Hochvoltspeichers optimal gekühlt wird. Sind sowohl der zweite Wärmequellen-Kühlbetrieb als auch der zweite HVS-Kühlbetrieb eingestellt, dann wird die Wärmequelle über den Umgebungskühler gekühlt, nicht aber über den Chiller, und der Hochvoltspeicher wird umgekehrt über den Chiller gekühlt, nicht aber über den Umgebungskühler.

Vorliegend ist als ein weiterer Schaltzustand ein zweiter Schaltzustand einstellbar, in welchem der HVS-Kreis stromauf und stromab des Chillers mit dem Kühlkreis verbunden ist, sodass die Wärmequelle, der Chiller und der erste Umgebungskühler derart in Serie geschaltet sind, dass die Wärmequelle stromauf des Chillers angeordnet ist und der erste Umgebungskühler stromab des Chillers, zur Kühlung der Wärmequelle über den Chiller oder den ersten Umgebungskühler oder beide. Der zweite Schaltzustand bietet aufgrund der Serienschaltung aus Wärmequelle, Chiller und erstem Umgebungskühler die vorteilhafte Möglichkeit, die Wärmequelle über verschiedene Wärmesenken, nämlich den Chiller und den ersten Umgebungskühler, besonders effektiv zu kühlen. Im Wärmepumpenbetrieb, also bei aktivierter Wärmepumpe, ist zudem vorteilhaft eine Wärmeaufnahme aus der Umgebung ermöglicht, falls der Chiller das Kühlmittel bis unter die Umgebungstemperatur abkühlt.

Die Serienschaltung aus Wärmequelle, Chiller und erstem Umgebungskühler ist geeigneterweise dadurch realisiert, dass der HVS-Kreis und der Kühlkreis mittels einer dritten Verbindungsleitung verbunden sind, welche im HVS-Kreis stromab des Chillers und stromauf des Hochvoltspeichers an einem fünften Anschlusspunkt beginnt und an einem sechsten Anschlusspunkt stromab der Wärmequelle und stromauf des Umgebungskühlers in den Kühlkreis mündet. Auf diese Weise ist zwischen dem vierten Anschlusspunkt und dem sechsten Anschlusspunkt ein Leitungsabschnitt des Kühlkreises als ein Chiller-Bypass ausgebildet. Das Kühlmittel kann nun entweder im zweiten Schaltzustand stromab der Wärmequelle über den Chiller zum Umgebungskühler geführt werden oder in einem anderen Schaltzustand über den Chiller-Bypass am Chiller vorbei direkt zum Umgebungskühler. Im zweiten Schaltzustand wird zur Kühlung der Wärmequelle der Chiller zweckmäßigerweise aktiviert, ebenso die Kühlkreispumpe.

Der zweite Schaltzustand hat zudem insbesondere den Vorteil, dass sich durch Aktivieren der HVS-Pumpe auf einfache Weise eine indirekte Kühlung des Hochvoltspeichers mittels des ersten Umgebungskühler realisieren lässt, obwohl diese beiden Komponenten im zweiten Schaltzustand nicht in Serie geschaltet sind. Hierzu ist in einer vorteilhaften Ausgestaltung stromauf und stromab des Chiller jeweils eine Verzweigung ausgebildet, sodass zwei Teilzweige ausgebildet sind, nämlich ein HVS-Zweig und ein Kühlerzweig, wobei an den HVS-Zweig der Hochvoltspeicher angeschlossen ist und wobei an den Kühlerzweig die Wärmequelle und der erste Umgebungskühler angeschlossen sind. Der HVS-Zweig und der Kühlerzweig sind dann im zweiten Schaltzustand zueinander parallel geschaltet, zur Kühlung des Hochvoltspeichers mittels des ersten Umgebungskühlers durch Mischung von Kühlmittel aus den beiden Teilzweigen stromauf des Chillers.

Der zweiten Schaltzustand ermöglicht somit vorteilhaft die folgenden beiden Betriebsmodi: einen ersten Wärmequellen-Kühlbetrieb, in welchem die Wärmequelle mittels des Chillers und ggf. zusätzlich mittels des ersten Umgebungskühlers gekühlt wird, sowie einen ersten HVS-Kühlbetrieb, in welchem sowohl im HVS-Kreis als auch im Kühlkreis Kühlmittel gefördert wird, das Kühlmittel im Kühlkreis gekühlt wird und mit dem Kühlmittel im HVS-Kreis gemischt wird, sodass der Hochvoltspeicher indirekt über den Kühlkreis gekühlt wird.

Für den Fall, dass das Kühlmittel im ersten Wärmequellen-Kühlbetrieb beim Einströmen in den ersten Umgebungskühler eine Temperatur aufweist, welche geringer ist als die Umgebungstemperatur, ist eine Wärmeaufnahme aus der Umgebung mittels des Umgebungskühlers möglich und wird in einer geeigneten Ausgestaltung auch durchgeführt. Die Wärmeaufnahme am Umgebungskühler hängt insbesondere von der Fahrgeschwindigkeit des Fahrzeugs ab und ggf. von dem Volumendurchsatz eines Lüfters im Umgebungsluftpfad. Die aus der Umgebung aufgenommene Wärme wird dann zweckmäßigerweise zur Beheizung verwendet, z.B. zur Innenraumbeheizung. Zur Messung der Temperatur des Kühlmittels beim Einströmen in den ersten Umgebungskühler ist stromauf desselben zweckmäßigerweise ein Temperatursensor an den Kühlkreis angeschlossen.

Der erste HVS-Kühlbetrieb baut im Grunde auf dem ersten Wärmequellen-Kühlbetrieb auf und entspricht diesem insofern, als dass die Wärmequelle, der Chiller und der Umgebungskühler in Serie geschaltet sind. Zusätzlich wird nun aber im ersten HVS-Kühlbetrieb die HVS-Pumpe aktiviert. Dadurch mischt sich Kühlmittel, welches vom Hochvoltspeicher zum Chiller strömt, mit demjenigen Kühlmittel, welches von der Wärmequelle zum Chiller strömt, sodass im Ergebnis eine Kühlung des Hochvoltspeichers realisiert ist. Die Vermischung erfolgt insbesondere am dritten Anschlusspunkt, an welchem das Kühlmittel von der Wärmequelle über die zweite Verbindungsleitung in den HVS-Kreis geführt wird. Wesentlich für die Vermischung ist insbesondere, dass die HVS-Pumpe aktiviert ist, sodass das Kühlmittel auch durch den Hochvoltspeicher geführt wird. Zudem ist insbesondere auch die Kühlkreispumpe aktiviert, um das Kühlmittel durch den ersten Umgebungskühler zu fördern. Die Kühlung des Hochvoltspeichers wird dann insbesondere durch das Verhältnis der Pumpenleistungen der HVS-Pumpe und der Kühlkreispumpe eingestellt.

Im ersten HVS-Kühlbetrieb wird also effektiv Abwärme vom Hochvoltspeicher durch den Chiller zum Umgebungskühler geführt und dort an die Umgebung abgegeben. Gegenüber einer Kühlung des Hochvoltspeichers allein mit dem Chiller, insbesondere wie im zweiten HVS-Kühlbetrieb, wird im ersten HVS-Kühlbetrieb der Kältekreis vorteilhaft durch den ersten Umgebungskühler als zusätzliche Wärmesenke entlastet und der Chiller kann entsprechend mit geringerer Leistung betrieben werden oder gänzlich deaktiviert werden. Dadurch wird entsprechend Energie eingespart. Eine teilweise oder vollständige Wärmeabfuhr mittels des Chillers in den Kältekreis ist jedoch gegenüber einer Wärmeabgabe an die Umgebung dann vorteilhafter, wenn eine Heizanforderung z.B. zur Innenraumbeheizung vorliegt, welche dann zweckmäßigerweise mittels der Abwärme vom Hochvoltspeicher bedient wird.

In einer vorteilhaften Ausgestaltung ist in dem Kühlkreis stromauf des Umgebungskühlers ein zweites Stellglied angeordnet, welches zwei Schaltstellungen aufweist, nämlich eine erste Schaltstellung, in welcher die Wärmequelle über einen Chiller-Bypass, insbesondere wie oben bereits beschrieben, mit dem Umgebungskühler in Serie geschaltet ist, zur Umgehung des Chillers, und eine zweite Schaltstellung, in welcher der HVS-Kreis stromab des Chillers mit dem Kühlkreis verbunden ist, sodass die Wärmequelle, der Chiller und der Umgebungskühler derart in Serie geschaltet sind, dass der Chiller stromauf des Umgebungskühler und stromab der Wärmequelle angeordnet ist, zur Einstellung des zweiten Schaltzustands. Die erste Schaltstellung ist dagegen insbesondere zum Einstellen des dritten Schaltzustands des Wärmesystems geeignet.

Das zweite Stellglied ist insbesondere ein Ventil. Grundsätzlich sind für das zweite Stellglied in dem Kühlkreis zwei Positionen geeignet, nämlich entweder am Beginn oder am Ende des Chiller-Bypass, d.h. insbesondere am vierten Anschlusspunkt oder am sechsten Anschlusspunkt. Je nach Positionierung relativ zum Chiller-Bypass weist das zweite Stellglied einen Eingang und zwei Ausgängen oder umgekehrt zwei Eingängen und einen Ausgang auf. Besonders bevorzugt ist die Positionierung am Ende des Chiller-Bypass, insbesondere am sechsten Anschlusspunkt, sodass der Chiller-Bypass in einen ersten Eingang mündet und der HVS-Kreis insbesondere über die dritte Verbindungsleitung an einen zweiten Eingang angeschlossen ist. Ein Ausgang führt dann zum Umgebungskühler. In der ersten Schaltstellung wird dann Kühlmittel über den Chiller-Bypass in den ersten Eingang geführt und somit der zweite Wärmequellen-Kühlbetrieb ermöglicht. In der zweiten Schaltstellung wird dagegen der Chiller-Bypass abgesperrt und Kühlmittel über den Chiller zum ersten Umgebungskühler geführt und somit der erste Wärmequellen-Kühlbetrieb realisiert. In der zweiten Schaltstellung lässt sich zudem auch der erste HVS-Kühlbetrieb realisieren, wobei dann ein Teil des Kühlmittels an der entsprechenden Verzweigung stromab des Chillers nicht zum zweiten Eingang, sondern zum Hochvoltspeicher geführt wird. Das zweite Stellglied ist in einer geeigneten Ausgestaltung als 3/2-Wegeventil ausgebildet. Für die alternative Positionierung des zweiten Stellglieds gelten die vorigen Ausführungen analog.

In einer vorteilhaften Ausgestaltung ist als ein weiterer Schaltzustand ein vierter Schaltzustand einstellbar, in welchem der HVS-Kreis stromauf und stromab der Wärmequelle mit dem Kühlkreis derart verbunden ist, dass die Wärmequelle parallel zu dem Hochvoltspeicher und dem Chiller geschaltet ist und dass der Chiller stromab des ersten Umgebungskühlers und stromauf des Hochvoltspeichers angeordnet ist. Im vierten Schaltzustand ergibt sich vorteilhaft die Möglichkeit, einen dritten HVS-Kühlbetrieb zu realisieren, in welchem der Hochvoltspeicher sowohl mittels des Chillers als auch über den Kühlkreis oder ausschließlich über den Kühlkreis und speziell über den ersten Umgebungskühler gekühlt wird. Zudem ist gleichzeitig zum dritten HVS-Kühlbetrieb vorteilhaft auch der zweite Wärmequellen-Kühlbetrieb einstellbar, zur Kühlung der Wärmequelle über den ersten Umgebungskühler. Unterschiede zum zweiten Schaltzustand bestehen insbesondere darin, dass im vierten Schaltzustand der Chiller lediglich mit dem Hochvoltspeicher in Serie geschaltet ist, nicht aber mit der Wärmequelle, und dass der Hochvoltspeicher mit dem ersten Umgebungskühler in Serie geschaltet. Speziell Letzteres hat zur Folge, dass der Hochvoltspeicher nunmehr nicht wie oben beschrieben lediglich indirekt durch Vermischen von Kühlmittel über den ersten Umgebungskühler gekühlt wird, sondern dass das gesamte Kühlmittel vom Hochvoltspeicher auch zum ersten Umgebungskühler geführt wird, da nun der erste Umgebungskühler nicht auf einem Teilzweig parallel zum Hochvoltspeicher angeordnet ist, sondern auf einem Hauptstrang liegt, in welchen beide Teilzweige münden. Deutlich bedeutender ist allerdings, dass zwischen dem Umgebungskühler und dem Hochvoltspeicher keine Wärmequelle angeordnet ist, sodass das Kühlmittel den Hochvoltspeicher mit einem besonders geringen Temperaturniveau erreicht. Dadurch ist im dritten HVS-Kühlbetrieb eine besonders optimale Kühlung gewährleistet und insbesondere auch eine bessere Kühlung als im ersten HVS-Kühlbetrieb. Der dritte HVS-Kühlbetrieb wird vorteilhaft verwendet, falls das Kühlmittel stromab des ersten Umgebungskühlers eine geringere Temperatur aufweist als stromab des Hochvoltspeichers, d.h. falls die Umgebungstemperatur geringer ist als die Temperatur des Hochvoltspeichers. In diesem Fall kann Abwärme des Hochvoltspeichers an die Umgebung abgegeben werden. Die Temperatur des Hochvoltspeichers selbst kann jedoch deutlich oberhalb der Temperatur des Kühlmittels am Hochvoltspeicher liegen, sodass letztere nicht zwingend größer ist als die Umgebungstemperatur. Gegenüber einer reinen Umgebungskühlung des Hochvoltspeichers weist der dritte HVS-Kühlbetrieb insbesondere den Vorteil auf, dass auch bei einer hohen Umgebungstemperatur, bei welcher die Abwärme des Hochvoltspeichers nicht vollständig an die Umgebung abgegeben werden kann, eine optimale Kühlung des Hochvoltspeichers mittels des Chillers realisiert ist. Gegenüber einer reinen Kühlung mittels des Chillers, ist der dritte HVS-Kühlbetrieb dagegen insbesondere dadurch vorteilhaft, dass Abwärme des Hochvoltspeichers soweit wie möglich an die Umgebung abgegeben wird und der Chiller lediglich unterstützend verwendet wird. Im Vergleich mit einer reinen Kühlung mittels des Chillers wird der Kältekreis im dritten HVS-Kühlbetrieb entsprechend entlastet und daher mit geringerer Leistung betrieben, sodass entsprechend Energie eingespart wird. In einer geeigneten Variante wird dagegen umgekehrt der Kältekreis mit voller Leistung betrieben und über den Umgebungskühler unterstützend gekühlt.

Aufgrund der kombinierten Wärmeabfuhr vom Hochvoltspeicher sowohl über den Chiller als auch über den Umgebungskühler wird der dritte HVS-Kühlbetrieb auch als Kombinationskühlbetrieb bezeichnet. Das Kühlmittel für den Hochvoltspeicher wird zuerst durch den ersten Umgebungskühler vorgekühlt und danach je nach Bedarf mittels des Chillers zusätzlich weiter gekühlt oder nicht weiter gekühlt. Der Chiller muss demnach im dritten HVS-Kühlbetrieb nicht zwingend aktiviert sein, insbesondere falls die Kühlung über die Umgebung bereits ausreichend ist.

In einer vorteilhaften Ausgestaltung ist in dem HVS-Kreis stromauf des Chillers ein drittes Stellglied angeordnet, welches zwei Schaltstellungen aufweist, nämlich eine erste Schaltstellung, in welcher der Hochvoltspeicher nicht in Serie mit dem ersten Umgebungskühler geschaltet ist, und eine zweite Schaltstellung, in welcher der HVS-Kreis stromauf des Chillers mit dem Kühlkreis verbunden ist, sodass der erste Umgebungskühler, der Chiller und der Hochvoltspeicher derart in Serie geschaltet sind, dass der Chiller stromab des ersten Umgebungskühlers und stromauf des Hochvoltspeichers angeordnet ist, zur Einstellung des vierten Schaltzustands.

Das dritte Stellglied ist insbesondere ein Ventil. Das dritte Stellglied ist im HVS-Kreis insbesondere zwischen dem Chiller und dem ersten Stellglied angeordnet. Daraus ergibt sich, dass in der ersten Schaltstellung das dritte Stellglied stromab des ersten Stellglieds angeordnet ist, in der zweiten Schaltstellung jedoch umgekehrt das erste Stellglied stromab des dritten Stellglieds angeordnet ist. Das dritte Stellglied weist einen Ausgang und zwei Eingänge auf, nämlich einen ersten Eingang und einen zweiten Eingang. Der Ausgang ist stromauf des Chillers angeordnet, der erste Eingang ist stromab des Hochvoltspeichers angeordnet und der zweite Eingang ist stromab des ersten Umgebungskühlers angeordnet. Somit ist das dritte Stellglied im HVS-Kreis stromauf des Chillers und stromab des Hochvoltspeichers angeordnet sowie insbesondere auch stromab des dritten Anschlusspunkts. Das dritte Stellglied ist ausgebildet, über den zweiten Eingang Kühlmittel vom ersten Umgebungskühler in den HVS-Kreis zu führen. In der ersten Schaltstellung ist der erste Eingang geöffnet, sodass Kühlmittel vom Hochvoltspeicher zum Chiller geführt wird. In der zweiten Schaltstellung ist dagegen der zweite Eingang geöffnet, sodass das Kühlmittel vom Hochvoltspeicher über die zweite Verbindungsleitung in den Kühlkreis und zum Umgebungskühler geführt wird, ausgehend hiervon über das dritte Stellglied zum Chiller und schließlich wieder zum Hochvoltspeicher. Das dritte Stellglied ist in einer geeigneten Ausgestaltung als 3/2-Wegeventil ausgebildet.

Insbesondere für den vierten Schaltzustand ist in einer vorteilhaften Ausgestaltung stromab des ersten Umgebungskühlers eine Kühlerverzweigung ausgebildet, sodass stromab von dieser zwei Teilzweige ausgebildet sind, nämlich ein erster Teilzweig und ein zweiter Teilzweig, auf welche das Kühlmittel entsprechend aufgeteilt wird. Mit anderen Worten: ausgehend von der Kühlerverzweigung erstrecken sich ein erster Teilzweig und ein zweiter Teilzweig. Der erste Teilzweig enthält einen Vorlauf für die Wärmequelle und der zweite Teilzweig führt stromauf des Chillers in den HVS-Kreis und ist in diesem fortgesetzt, umfasst also Teile des HVS-Kreises. Die beiden Teilzweige enden gemeinsam insbesondere stromab der Wärmequelle, zweckmäßigerweise im vierten Anschlusspunkt, sodass dort das Kühlmittel wieder zusammengeführt und insgesamt wieder zum ersten Umgebungskühler geführt wird. Der zweite Teilzweig enthält Teile des HVS-Kreises, vor Allem den Chiller und den Hochvoltspeicher, sowie auch eine vierte Verbindungsleitung, welche von der Kühlerverzweigung zum HVS-Kreis, d.h. insbesondere zum dritten Stellglied, führt. Der erste Teilzweig enthält die Wärmequelle, sodass insbesondere im vierten Schaltzustand insgesamt die Wärmequelle zum HVS-Kreis parallel geschaltet ist.

Im vierten Schaltzustand wird auf der zweiten Verbindungsleitung vom HVS-Kreis zum Kühlkreis stromab der Wärmequelle die Strömungsrichtung des Kühlmittels umgekehrt. Auf allen übrigen Leitungsabschnitten bleibt jedoch vorteilhaft die Strömungsrichtung insbesondere unabhängig vom Schaltzustand dieselbe. Dadurch ist das Wärmesystem besonders einfach und mit besonders geringer Verzögerung zwischen verschiedenen Schaltzuständen und Betriebsmodi umschaltbar. Aufgrund der Umkehrung der Strömungsrichtung auf der zweiten Verbindungsleitung im vierten Schaltzustand ist das zweite Stellglied, sofern vorhanden, vorzugsweise wie bereits oben beschrieben am Ende des Chiller-Bypass angeordnet. Bei einer Positionierung am Beginn des Chiller-Bypass würde ein Teil des Kühlmittels stromab des Chillers zum Umgebungskühler strömen und nicht zum Hochvoltspeicher, sodass ein zusätzliches Absperrventil erforderlich wäre, um dies zu verhindern.

Wie sich aus den obigen Ausführungen ergibt, sind in vorzugsweise allen vier Schaltzuständen der Hochvoltspeicher und der Chiller immer in Serie geschaltet und ebenso sind vorzugsweise auch die Wärmequelle und der erste Umgebungskühler immer in Serie geschaltet. Das Umschalten zwischen zwei Schaltzuständen dient dann insbesondere dazu, den Hochvoltspeicher bedarfsweise auch mit dem ersten Umgebungskühler in Serie zu schalten oder die Wärmequelle bedarfsweise mit dem Chiller in Serie zu schalten.

Die oben beschriebenen Schaltzustände und die darin jeweils möglichen Betriebsmodi lassen sich zusammenfassend wie folgt beschreiben:
Im ersten Schaltzustand sind insbesondere folgende Betriebsmodi möglich:
   - Ein erster HVS-Heizbetrieb, bei welchem der Hochvoltspeicher mittels Abwärme von der Wärmequelle beheizt wird. Für die Wärmequelle stellt dies zugleich einen Kühlbetrieb dar.
   - Ein Vertrimmungsbetrieb, welcher eine Variation des ersten HVS-Heizbetriebs ist und bei welchem die Wärmequelle vertrimmt wird, um Abwärme zu erzeugen.
Im zweiten Schaltzustand sind insbesondere folgende Betriebsmodi möglich:
   - Ein erster HVS-Kühlbetrieb, bei welchem der Hochvoltspeicher zum ersten Umgebungskühler parallel geschaltet ist und über diesen indirekt gekühlt wird, indem ausgenutzt wird, dass sich das Kühlmittel vom ersten Umgebungskühler mit dem parallel dazu strömenden Kühlmittel vom Hochvoltspeicher mischt und dadurch ein Wärmetausch erfolgt.
   - Ein erster Wärmequellen-Kühlbetrieb, bei welchem die Wärmequelle sowohl über den Chiller als auch den ersten Umgebungskühler kühlbar ist und über wenigstens eine dieser Komponenten auch gekühlt wird.
Im dritter Schaltzustand sind insbesondere folgende Betriebsmodi möglich:
   - Ein zweiter HVS-Kühlbetrieb, bei welchem der Hochvoltspeicher mittels des Chillers gekühlt wird.
   - Ein Homogenisierungsbetrieb, bei welchem die Wärmeverteilung innerhalb des Hochvoltspeichers homogenisiert wird, sodass die Temperaturspreizung reduziert und die Temperaturen unterschiedlicher Zellen des Hochvoltspeichers aneinander angeglichen werden.
   - Ein zweiter HVS-Heizbetrieb, in welchem der Hochvoltspeicher über einen HVS-Zuheizer im HVS-Kreis beheizt wird.

Ein zweiter Wärmequellen-Kühlbetrieb, bei welchem die Wärmequelle unabhängig von Hochvoltspeicher über den ersten Umgebungskühler gekühlt wird.

Im vierten Schaltzustand sind insbesondere folgende Betriebsmodi möglich:
- Ein dritter HVS-Kühlbetrieb, bei welchem der Hochvoltspeicher sowohl über den Chiller als auch den ersten Umgebungskühler kühlbar ist und über wenigstens eine dieser Komponenten auch gekühlt wird.
- Der zweite Wärmequellen-Kühlbetrieb, also die Kühlung der Wärmequelle über den ersten Umgebungskühler, ist grundsätzlich auch im vierten Schaltzustand möglich.

Wie aus dieser Auflistung deutlich wird, müssen nicht alle vier Schaltzustände realisiert sein, um bereits eine besonders flexible Temperierung zu ermöglichen. Besonders vorteilhaft ist bereits ein Wärmesystem, bei welchem wenigstens der erste und der dritte Schaltzustand einstellbar sind, denn diese beiden Schaltzustände ermöglichen in Kombination bereits eine Vielzahl an Betriebsmodi zur Bedienung unterschiedlichster Temperierungsanforderungen, nämlich eine bedarfsgerechte und energieeffiziente Beheizung des Hochvoltspeichers sowie in Kombination damit oder unabhängig davon eine bedarfsgerechte Kühlung der Wärmequelle. Grundsätzlich sind jedoch auch andere Kombinationen von zwei oder mehr Schaltzuständen vorteilhaft.

Das Umschalten zwischen zwei Schaltzuständen erfolgt vorzugsweise mittels dem ersten, dem zweiten oder dem dritten Stellglied oder einer Kombination hiervon, je nachdem, welche Schaltzustände realisiert sind und zwischen welchen davon umgeschaltet werden soll. Ausgehen von einem Wärmesystem mit allen drei Stellgliedern gibt die nachfolgende Übersicht die Schaltstellungen zum Einstellen eines jeweiligen Schaltzustands wieder:

| Schaltzustand | Schaltstellung erstes Stellglied | Schaltstellung zweites Stellglied | Schaltstellung drittes Stellglied |
|---|---|---|---|
| 1. Schaltzustand | erste | zweite | erste |

| | | | |
|---|---|---|---|
| 2. Schaltzustand | zweite | zweite | erste |
| 3. Schaltzustand | zweite | erste | erste |
| 4. Schaltzustand | zweite | erste | zweite |

Aus der Übersicht wird deutlich, dass bei einer Kombination lediglich eines Teils der vier Schaltzustände nicht unbedingt alle Stellglieder benötigt werden. Beispielsweise wird das dritte Stellglied für den ersten, zweiten und dritten Schaltzustand nicht benötigt und vorzugsweise ausgelassen, falls bei einem Wärmesystem der vierte Schaltzustand nicht benötigt wird und auch nicht einstellbar ist.

Aus der Übersicht in Verbindung mit der Beschreibung der Schaltzustände ergibt sich auch, dass insbesondere das erste Stellglied dazu dient, den Hochvoltspeicher und die Wärmequelle entweder in Serie zu schalten oder nicht in Serie zu schalten. Das zweite Stellglied dient insbesondere dazu, den Chiller und die Wärmequelle entweder in Serie zu schalten oder nicht in Serie zu schalten. Das dritte Stellglied dient insbesondere dazu, den Hochvoltspeicher und den ersten Umgebungskühler entweder in Serie zu schalten oder nicht in Serie zu schalten.

Die Betriebsmodi innerhalb eines jeweiligen Schaltzustands werden insbesondere dadurch eingestellt, dass die HVS-Pumpe, die Kühlkreispumpe und der Chiller entsprechend aktiviert oder deaktiviert werden. Sofern eine Temperierung des Hochvoltspeichers erfolgen soll, wird hierzu die HVS-Pumpe aktiviert. Die Kühlkreispumpe wird deaktiviert, insbesondere falls der Hochvoltspeicher beheizt wird. Sofern eine Temperierung der Wärmequelle erfolgen soll, wird hierzu die Kühlkreispumpe aktiviert. Sofern beide Pumpen aktiviert sind, wird das Ausmaß der jeweiligen Temperierung zweckmäßigerweise dadurch eingestellt, dass ein entsprechend geeignetes Verhältnis an Pumpenleistung der beiden Pumpen relativ zueinander eingestellt wird. Sofern eine Kühlung mittels des Chillers erfolgen soll, wird dieser entsprechend aktiviert. Die Menge an Wärme, welche vom Chiller in den Kältekreis übertragen wird, wird insbesondere dadurch eingestellt, dass eine Öffnung des Expansionsventils vor dem Chiller oder eine Verdichterleistung des Verdichters oder beides geeignet eingestellt werden.

Vorzugsweise ist der erste Umgebungskühler mit einem zweiten Umgebungskühler kombiniert und bildet mit diesem zusammen insbesondere ein Kühlerpaket, bei welchem die beiden Umgebungskühler hintereinander in einem Umgebungsluftpfad angeordnet sind. Der erste Umgebungskühler wird auch als HT-Kühler bezeichnet, d.h. als Hochtemperaturkühler. Der zweite Umgebungskühler wird dagegen als NT-Kühler bezeichnet, d.h. als Niedertemperaturkühler. Mit anderen Worten: der zweite Umgebungskühler wird von kälterem Kühlmittel durchströmt als der erste Umgebungskühler. Dies wird insbesondere dadurch erreicht, dass der zweite Umgebungskühler bezüglich des Kühlmittels stromab des ersten Umgebungskühlers angeordnet ist, im Umgebungsluftpfad dagegen stromauf des ersten Umgebungskühlers. Mit dem Kühlerpaket erfolgt entsprechend eine zweistufige Kühlung des Kühlmittels.

In einer vorteilhaften Ausgestaltung ist stromab des ersten Umgebungskühlers eine Kühlerverzweigung ausgebildet, insbesondere wie weiter oben bereits im Zusammenhang mit dem vierten Schaltzustand beschrieben. Von der Kühlerverzweigung ausgehend erstrecken sich ein NT-Zweig und ein HT-Zweig, wobei der HT-Zweig einen Vorlauf für die Wärmequelle bildet und wobei der NT-Zweig stromauf des Chillers an den HVS-Kreis angeschlossen ist, wobei an den NT-Zweig stromauf des HVS-Kreis ein zweiter Umgebungskühler angeschlossen ist. Auf diese Weise ist der Wärmetausch mit der Umgebung deutlich verbessert. Der NT-Zweig entspricht insbesondere der oben bereits erwähnten vierten Verbindungsleitung. Der HT-Zweig ist insbesondere vollständig ein Teil des Kühlkreises.

Vorliegend ist zwischen den beiden Umgebungskühlern die Kühlerverzweigung angeordnet, sodass die zweistufige Kühlung des Kühlmittels lediglich für den NT-Zweig durchgeführt wird, welcher zum HVS-Kreis führt. Somit steht zur Kühlung des Hochvoltspeichers ein besonders weit abgekühltes Kühlmittel zur Verfügung. Die Wärmequelle wird dagegen über den HT-Zweig mit wärmerem Kühlmittel versorgt. Der NT-Zweig endet insbesondere an einem der Eingänge des dritten Stellglieds, nämlich an demjenigen Eingang, welcher den HVS-Kreis stromauf des Chillers mit dem Kühlkreis verbindet. Demnach wird lediglich im vierten Schaltzustand Kühlmittel über den NT-Zweig in den HVS-Kreis gefördert. Die Kühlung des Hochvoltspeichers in einem Betriebsmodus im vierten Schaltzustand ist dadurch besonders effektiv, denn das Kühlmittel kann hierbei sozusagen dreistufig gekühlt werden und wird vorzugsweise auch dreistufig gekühlt, bevor es zum Hochvoltspeicher gelangt: nämlich zuerst im HT-Kühler, dann im NT-Kühler und schließlich im Chiller.

Ein besonderer Vorteil der diversen vorgenannten Ausgestaltungen des Wärmesystems ist insbesondere, dass sich auf besonders einfache Weise auch eine Innenraumklimatisierung für das Fahrzeug implementieren lässt. Das Wärmesystem dient dann nicht nur zur Temperierung des Hochvoltspeichers und der Wärmequelle, sondern auch zur Temperierung eines Innenraums des Fahrzeugs. Dabei wird vorteilhaft die von diesen Komponenten erzeugte Abwärme wenigstens teilweise zur Temperierung des Innenraums genutzt, anstatt an die Umgebung abgegeben zu werden, sodass das Wärmesystem besonders energieeffizient ist. Ein besonderer Vorteil der oben beschriebenen Verschaltung des Gesamtkühlkreises ist in diesem Zusammenhang insbesondere, dass sich die Innenraumtemperierung unabhängig von der Temperierung des Hochvoltspeichers und der Wärmequelle realisieren lässt, sodass insgesamt eine optimale und besonders bedarfsgerechte Bedienung diverser Temperierungsanforderungen in unterschiedlichsten Kombinationen gewährleistet ist.

Zur Innenraumklimatisierung weist der Gesamtkühlkreis in einer vorteilhaften Ausgestaltung einen Heizkreis auf, an welchen ein Heizungswärmetauscher angeschlossen ist, zur Beheizung von Innenraumluft für das Elektro- oder Hybridfahrzeug. An den Heizkreis ist ein Kondensator angeschlossen, welcher auch an den Kältekreis angeschlossen ist und zusammen mit dem Chiller eine Wärmepumpe bildet, welche ausgebildet ist, in einem Wärmepumpenbetrieb Wärme vom Chiller in den Heizkreis zu übertragen. Der Heizkreis ist mit dem Kühlkreis derart verbindbar, dass der Kondensator, der Heizungswärmetauscher und der erste Umgebungskühler in Serie geschaltet sind.

Vorzugsweise sind der Heizungswärmetauscher und der Kondensator zwei separate Komponenten. Der Kondensator ist dabei insbesondere ein Kühlmittel/Kältemittel-Kondensator, also ein wassergekühlter Kondensator, kurz WCC. in einer ebenfalls geeigneten Variante ist der Kondensator dagegen zugleich der Heizungswärmetauscher und insbesondere entsprechend als Teil des Klimageräts im Luftpfad für die Innenraumluft angeordnet. Diese wird dann direkt mittels des Kondensators erwärmt, sodass der Kondensator ein Luft/Kältemittel-Kondensator ist, also ein luftgekühlter Kondensator, kurz ACC.

Der Wärmepumpenbetrieb ermöglicht vorteilhaft die Nutzung von Abwärme vom Hochvoltspeicher, von der Wärmequelle, vom Klima-Verdampfer, indirekt über den Umgebungskühler oder einer Kombination hiervon zur Innenraumbeheizung. Zugleich ist durch die Serienschaltung mit dem ersten Umgebungskühler auch überschüssige Wärme aus dem Heizkreis über den ersten Umgebungskühler an die Umgebung abführbar. Entsprechend dient der Heizkreis vorteilhaft auch dazu, über den Kondensator Wärme aus dem Kältekreis an die Umgebung abzuführen. Insgesamt ist durch den Heizkreis und dessen spezielle Integration in den Gesamtkühlkreis somit ein besonders effektives Wärmemanagement realisiert, bei welchem diverse Temperierungsanforderungen auf besonders effiziente Weise jeweils bedarfsgerecht bedient werden.

Unter "Wärmepumpenbetrieb" wird vorliegend insbesondere verstanden, dass die Wärmepumpe aktiviert ist und mittels dieser Wärme in den Heizkreis übertragen wird. Wie die Wärme dort weiterverwendet wird, ist für den Wärmepumpenbetrieb an sich zunächst nicht von Bedeutung.

Der Heizkreis ist zunächst separat zum HVS-Kreis und zum Kühlkreis als ein dritter Kreis des Gesamtkühlkreises ausgebildet und ist entsprechend unabhängig vom HVS-Kreis und vom Kühlkreis betreibbar. Zur Förderung von Kühlmittel im Heizkreis ist in diesem insbesondere eine Pumpe angeordnet, welche auch als Heizkreispumpe bezeichnet wird.

Der Heizkreis ist ähnlich dem HVS-Kreis zweckmäßigerweise über Verbindungsleitungen an den Kühlkreis angebunden, insbesondere über einen Heiz-Vorlauf und einen Heiz-Rücklauf. Zur Realisierung der Serienschaltung des Kondensators, des Heizungswärmetauschers und des ersten Umgebungskühlers ist der Heiz-Vorlauf insbesondere stromab des ersten Umgebungskühlers an den Kühlkreis angeschlossen. Stromauf des Heiz-Vorlaufs folgen dann der Kondensator und der Heizungswärmetauscher, wobei der Kondensator vorzugsweise stromauf des Heizungswärmetauschers angeordnet ist, sodass Wärme, welche in den Heizkreis gelangt, zunächst zur Innenraumtemperierung verwendbar ist, bevor eine Abgabe an die Umgebung über den Kühlkreis erfolgt.

Der Heizkreis ist insgesamt vorzugsweise als ein Kreislauf ausgebildet, mit einem Hauptstrang und einem Rückführungsstrang. Der Hauptstrang erstreckt sich vom Heiz-Vorlauf und stromab desselben bis zum Heiz-Rücklauf, der Rückführungsstrang dann in umgekehrter Richtung. Der Rückführungsstrang dient dann zur Rückführung des Kühlmittels und erneuten Förderung durch den Hauptstrang für den Fall, dass der Heizkreis von Kühlkreis getrennt betrieben wird. Der Kondensator und der Heizungswärmetauscher sind vorzugsweise an den Hauptstrang anschlossen, sodass diese Komponenten unabhängig davon, ob der Heizkreis vom Kühlkreis getrennt ist oder nicht, zuverlässig mit Kühlmittel durchströmbar sind. Auch die Heizkreispumpe ist zweckmäßigerweise auf dem Hauptstrang angeordnet. Auf dem Rückführungsstrang ist vorzugsweise ein Rückschlagventil angeordnet, um insbesondere eine Umgehung des Kondensators zu unterbinden. Abgesehen von dem Rückschlagventil sind auf dem Rückführungsstrang vorzugsweise keine weiteren Komponenten angeordnet, sodass der Rückführungsstrang lediglich zur Rückführung des Kühlmittels in den Hauptstrang dient und insbesondere auch einfacher entlüftbar ist.

Zur Innenraumtemperierung weist das Wärmesystem vorzugsweise einen Klima-Verdampfer auf, welcher allgemein ein Verdampfer ist und an den Kältekreis angeschlossen ist. Der Klima-Verdampfer ist im Kältekreis insbesondere parallel zum Chiller geschaltet. Zum Einstellen der Kühlleistung des Klima-Verdampfers ist diesem im Kältekreis zweckmäßigerweise ein einstellbares Expansionsventil vorgeschaltet, vorzugsweise ein selbstregelndes und elektrisch absperrbares Expansionsventil, kurz eTXV. Durch entsprechendes Einstellen der Expansionsventile vor dem Chiller und dem Klima-Verdampfer wird dann die Kälteleistung des Kältekreises auf den Klima-Verdampfer und den Chiller verteilt. Die Klimaleistung insgesamt wird insbesondere mittels des Verdichters eingestellt und insbesondere auch mittels eines Lüfters als Teil eines Kühlerpakets mit dem Umgebungskühler. Um im Falle eines deaktivierten Klima-Verdampfers und eines aktivierten Chillers einen Rückfluss von Kältemittel in den Klima-Verdampfer und dadurch eine Unterfüllung insbesondere der Saugleitung des Kältekreises zu verhindern, ist im Kältekreis stromab des Verdampfers und stromauf einer Verzweigung zum Chiller zweckmäßigerweise ein Rückschlagventil angeordnet.

Der Heizungswärmetauscher und der Klima-Verdampfer bilden zusammen ein Klimagerät, mittels welchem der Innenraum sowohl beheizt als auch gekühlt als auch entfeuchtet werden kann. Das Klimagerät weist insbesondere einen Luftpfad auf, über welchen Luft in den Innenraum des Fahrzeugs gelangt. Der Innenraum wird dann temperiert, indem die Luft, welche dem Innenraum zugeführt wird, d.h. die Innenraumluft, entsprechend temperiert wird. Hierzu sind der Klima-Verdampfer und der Heizungswärmetauscher in dem Luftpfad angeordnet und werden von der Innenraumluft überströmt. Zweckmäßigerweise ist der Heizungswärmetauscher im Luftpfad stromab des Klima-Verdampfers angeordnet, sodass auch eine besonders effektive Entfeuchtung der Innenraumluft ermöglicht ist.

Aufgrund des Heizungswärmetauschers und des Klima-Verdampfers sind bei dem Wärmesystem drei weitere Betriebsmodi einstellbar, nämlich eine Innenraumbeheizung, eine Innenraumkühlung und eine Entfeuchtung, wobei die Entfeuchtung letztendlich eine Kombination der Innenraumbeheizung und der Innenraumkühlung ist. Diese Betriebsmodi werden zusammenfassend auch als Klima-Betriebsmodi bezeichnet. Bei der Innenraumbeheizung wird Wärme aus dem Heizkreis über den Heizungswärmetauscher an die Innenraumluft abgegeben und diese in den Innenraum eingeströmt. Bei der Innenraumkühlung wird umgekehrt der Innenraumluft mittels des Verdampfers Wärme entzogen und diese in den Kältekreis übertragen und dann die gekühlte Innenraumluft in den Innenraum eingeströmt. Für die Innenraumbeheizung und die Entfeuchtung wird die nötige Wärme in einer geeigneten Ausgestaltung mittels des Wärmepumpenbetriebs bereitgestellt.

In einer vorteilhaften Ausgestaltung ist der Heizkreis mit dem Kühlkreis über ein viertes Stellglied verbindbar, welches zwei Schaltstellungen aufweist, nämlich eine erste Schaltstellung, in welcher der Heizkreis vom Kühlkreis getrennt ist, zur Beheizung der Innenraumluft, und eine zweite Schaltstellung, in welcher der Heizkreis mit dem Kühlkreis verbunden ist, zur Wärmeabfuhr aus dem Heizkreis in den Kühlkreis. Ein besonderer Vorteil des vorliegenden Wärmesystem ist, dass das vierte Stellglied unabhängig vom jeweiligen Schaltzustand des ersten, zweiten und dritten Stellglieds umschaltbar ist, sodass in jedem der vier genannten Schaltzustände die Möglichkeit besteht, den Heizkreis mit dem Kühlkreis entweder zu verbinden oder von diesem zu trennen, je nachdem, wie der Innenraum temperiert werden soll. In einer vorteilhaften Ausgestaltung ist auch ein Mischbetrieb einstellbar, bei welchem das vierte Stellglied wiederkehrend geöffnet und geschlossen wird, d.h. getaktet betrieben wird, um lediglich einen Teil der Wärme abzuführen. Alternativ ist auch ein Proportionalventil geeignet, d.h. ein Ventil mit einem einstallbaren Öffnungsquerschnitt.

Das vierte Stellglied ist insbesondere ein Ventil, geeigneterweise ein Absperrventil. In der ersten Schaltstellung ist das vierte Stellglied geschlossen, in der zweiten Schaltstellung geöffnet. In einer vorteilhaften Ausgestaltung sind das vierte Stellglied und das Rückschlagventil im Rückführungsstrang in einem einzelnen 3-Wege-Ventil zusammengefasst. Das vierte Stellglied ist vorzugsweise entweder im Heiz-Vorlauf oder im Heiz-Rücklauf angeordnet.

Die spezielle Verschaltung des Wärmesystem ermöglicht vorteilhaft die Zusammenfassung des ersten, zweite, dritten und vierten Stellglieds - sofern jeweils vorhanden - in einem einzelnen Multiventil. In einer vorteilhaften Ausgestaltung weist daher das Wärmesystem ein Multiventil auf, in zugleich das erste, zweite, dritte und vierte Stellglied ist. Hierzu ist das Multiventil mit geeignet vielen Eingängen und Ausgängen ausgebildet und an die Kreise angeschlossen. Ein entsprechendes Multiventil ist Gegenstand einer parallel eingereichten Anmeldung.

Im Wärmepumpenbetrieb ist die Wärmepumpe aktiviert und Wärme wird vom Chiller im HVS-Kreis zum Kondensator im Heizkreis übertragen. Diese Wärme wird in einer geeigneten Ausgestaltung dem Heizungswärmetauscher zugeführt und zur Innenraumbeheizung verwendet. Soll dagegen keine Innenraumbeheizung erfolgen, wird die Wärme zweckmäßigerweise über den ersten Umgebungskühler an die Umgebung abgegeben und hierzu der Heizkreis mit dem Kühlkreis verbunden. Hierzu wird insbesondere das vierte Stellglied geöffnet, sodass dann der Kondensator, der Heizungswärmetauscher und der erste Umgebungskühler in Serie geschaltet sind. Eine Beheizung über den Heizungswärmetauscher wird dann insbesondere dadurch vermieden, dass dieser luftseitig abgesperrt wird, mit anderen Worten: es strömt zwar möglicherweise warmes Kühlmittel durch den Heizungswärmetauscher, es erfolgt allerdings keine Luftumwälzung im Luftpfad, sodass dem Innenraum keine erwärmte Innenraumluft zugeführt wird und der Innenraum entsprechend nicht beheizt wird. Um den Heizungswärmetauscher luftseitig abzusperren, ist im Luftpfad zweckmäßigerweise eine entsprechende Sperrvorrichtung angeordnet, z.B. eine Klappe.

In einer vorteilhaften Ausgestaltung ist im Heizkreis stromab des Kondensators und stromauf des Heizungswärmetauschers und insbesondere auf dem Hauptstrang ein Heizkreis-Zuheizer angeordnet, zur Zufuhr von Zusatzwärme in den Heizkreis. Der Heizkreis-Zuheizer ermöglicht auf einfache Weise eine Innenraumbeheizung in solchen Fällen, in welchen keine oder nicht ausreichend Wärme von der Wärmepumpe in den Heizkreis übertragen wird und wird dann geeigneterweise aktiviert. Alternativ oder zusätzlich zum Heizkreis-Zuheizer ist auch ein luftseitiger Zuheizer im Luftpfad für die Innenraumluft denkbar und geeignet. Ein solcher luftseitiger Zuheizer ist im Luftpfad zweckmäßigerweise stromab des Heizungswärmetauschers angeordnet.

Die weiter oben bereits beschriebene vorteilhafte Ausgestaltung mit einem HVS-Zuheizer ist auch in Kombination mit dem Heizkreis vorteilhaft. Falls eine Innenraumbeheizung erfolgen soll, im Heizkreis jedoch zu wenig Wärme hierfür vorhanden ist, wird bei der Innenraumbeheizung der HVS-Zuheizer aktiviert und dessen Abwärme über die Wärmepumpe in den Heizkreis übertragen. Der Heizkreis-Zuheizer kann daher entsprechend geringer dimensioniert werden oder gänzlich ausgelassen werden. In einer geeigneten Ausgestaltung weisen der HVS-Zuheizer und der Heizkreis-Zuheizer jeweils eine Leistung im Bereich von 4 kW bis 6 kW auf.

Der HVS-Zuheizer ist zweckmäßigerweise derart angeordnet, dass dieser lediglich von demjenigen Kühlmittel durchströmt wird, welches im HVS-Kreis zirkuliert, also gerade nicht unmittelbar vor oder nach dem Chiller, welcher in diversen Schaltzuständen des Wärmesystems möglicherweise zusätzlich von Kühlmittel aus dem Kühlkreis durchströmt wird. Stattdessen ist der HVS-Zuheizer auf einem Nebenstrang des HVS-Kreises angeordnet. Diese Anordnung im Nebenstrang ist hinsichtlich der Dimensionierung der Kühlkreispumpe vorteilhafter, insbesondere wird dann weniger Pumpleistung benötigt und nicht den Strömungswiderstand des HVS-Zuheizers überwinden muss. In einer vorteilhaften Variante wird dagegen gänzlich auf einen HVS-Zuheizer verzichtet.

Der HVS-Zuheizer oder der Heizkreis-Zuheizer oder beide sind jeweils beispielsweise als ein elektrischer Durchlauferhitzer ausgebildet.

Insgesamt ist vorteilhaft in jedem Schaltzustand und je nach Betriebsmodus hinsichtlich des Hochvoltspeichers und der Wärmequelle auf unterschiedliche Weise eine besonders bedarfsgerechte Innenraumtemperierung gewährleistet. Um eine Innenraumbeheizung einzustellen, wird allgemein insbesondere die Wärmepumpe aktiviert oder der Heizkreis-Zuheizer oder beides. Zweckmäßigerweise wird bei der Innenraumbeheizung das vierte Stellglied in die erste Schaltstellung geschaltet.

Im ersten Schaltzustand wird bei der Innenraumbeheizung insbesondere überschüssige Abwärme der Wärmequelle verwendet und mittels der Wärmepumpe in den Heizkreis übertragen. Im dritten und im vierten Schaltzustand wird bei der Innenraumbeheizung Abwärme vom Hochvoltspeicher mittels der Wärmepumpe in den Heizkreis übertragen. Im zweiten Schaltzustand wird bei der Innenraumbeheizung Abwärme von der Wärmequelle oder vom Hochvoltspeicher oder von beiden mittels der Wärmepumpe in den Heizkreis übertragen. Falls die Wärme, welche von der Wärmepumpe übertragen wird, nicht ausreicht oder falls die Wärmepumpe gar nicht aktiviert ist, wird zusätzliche Wärme mittels des Heizkreis-Zuheizers erzeugt. Ist die Wärmepumpe aktiviert, wird alternativ oder zusätzlich Wärme mittels des HVS-Zuheizers erzeugt.

Soll keine Innenraumbeheizung erfolgen, wird die Wärme im Heizkreis über den ersten Umgebungskühler abgeführt. Hierzu wird der Heizkreis mit dem Kühlkreis verbunden, insbesondere indem das vierte Stellglied in die zweite Schaltstellung umgeschaltet wird.

Bei der Innenraumkühlung wird mittels des Klima-Verdampfers Wärme von der Innenraumluft in den Kältekreis übertragen. Diese Wärme wird zweckmäßigerweise über den Kondensator in den Heizkreis übertragen und von dort in den Kühlkreis und über den ersten Umgebungskühler an die Umgebung. Bei der Entfeuchtung wird die Wärme des Klima-Verdampfers zweckmäßigerweise jedoch wenigstens teilweise wieder zur Erwärmung der Innenraumluft nach dem Kühlen verwendet. Alternativ sind der Klima-Verdampfer und der Chiller in separaten Kältekreisen angeordnet und der Kältekreis, an welchen der Klima-Verdampfer angeschlossen ist, weist einen Kondensator auf, welcher beispielsweise luftgekühlt ist und welcher zumindest nicht an den Gesamtkühlkreis angeschlossen ist.

Der Heizkreis und der HVS-Kreis sind vorzugsweise nicht miteinander verbunden. Mit anderen Worten: der Heizkreis und der HVS-Kreis sind jeweils an den Kühlkreis angebunden und insofern mittelbar miteinander verbunden, jedoch nicht unmittelbar. Dies steht im Gegensatz zur Kopplung, welche in der eingangs zitierten DE 10 2015 220 623 A1 beschrieben wird. Insbesondere sind der Heizkreis und der HVS-Kreis in keinem der vier Schaltzustände in Serie geschaltet, sondern entweder parallel zueinander geschaltet oder voneinander getrennt.

Bei einer Ausgestaltung mit erstem und zweitem Umgebungskühler wie oben bereits beschrieben ist der Heiz-Vorlauf in einer vorteilhaften Ausgestaltung stromab des zweiten Umgebungskühlers an den NT-Zweig angeschlossen. Diese Ausgestaltung ist insbesondere unabhängig davon, ob der NT-Zweig ebenfalls zum HVS-Kreis führt. So ist beispielsweise auch eine Ausgestaltung vorteilhaft, bei welcher kein vierter Schaltzustand einstellbar ist und bei welcher dann der NT-Zweig nicht zum HVS-Kreis führt und insbesondere lediglich zum Heizkreis.

Der Vorteil der Versorgung des Hochvoltspeichers mit Kühlmittel über den NT-Zweig gilt analog auch für die Versorgung des Heizkreises mit Kühlmittel aus dem NT-Zweig. Das Kühlmittel, welches in den Heizkreis strömt, weist eine besonders geringe Temperatur auf, sodass jegliche Wärme, welche aus dem Heizkreis abgeführt und an die Umgebung abgegeben werden soll, besonders effektiv aufgenommen und abgeführt wird. Dabei ist der Kältekreis umso effizienter und leistungsstärker, je geringer die Temperatur des Kühlmittels stromauf des Kondensators ist.

Zweckmäßigerweise weist das Wärmesystem ein Ausgleichsvolumen für das Kühlmittel auf. Aufgrund der hydraulischen Kopplung des Kühlkreises, des Heizkreises und des HVS-Kreises ist ein einzelnes Ausgleichsvolumen bereits ausreichend. Das Ausgleichsvolumen ist daher vorzugsweise das einzige Ausgleichsvolumen für Kühlmittel im Wärmesystem. Das Ausgleichsvolumen wird auch als Ausgleichsbehälter bezeichnet. In einer geeigneten Ausgestaltung ist das Ausgleichsvolumen zum Austausch von flüssigem Kühlmittel stromab des ersten Umgebungskühlers und insbesondere stromauf der Kühlerverzweigung an den Kühlkreis angeschlossen. Weiter ist das Ausgleichsvolumen zum Austausch von Luft an den ersten Umgebungskühler und ggf. auch an den zweiten Umgebungskühler angeschlossen.

In einer vorteilhaften Ausgestaltung ist im HVS-Kreis stromab des Hochvoltspeichers ein HVS-Rückschlagventil angeordnet. Das HVS-Rückschlagventil hat insbesondere zwei vorteilhafte Funktionen. Das HVS-Rückschlagventil verhindert insbesondere im ersten Wärmequellen-Kühlbetrieb, dass einerseits solches Kühlmittel, welches von der Wärmequelle erwärmt wurde, zum Hochvoltspeicher gelangt und diesen ungewollt erwärmt und dabei andererseits zugleich auch den Chiller ungewollt umgeht. Das HVS-Rückschlagventil ist zweckmäßigerweise stromauf des dritten Anschlusspunkts und besonders bevorzugt stromauf des ersten Anschlusspunktes angeordnet, sodass im ersten Wärmequellen-Kühlbetrieb das Kühlmittel nicht durch das HVS-Rückschlagventil strömt, wodurch ein entsprechender Druckverlust vorteilhaft vermieden wird.

In einer vorteilhaften Ausgestaltung ist stromauf des Hochvoltspeichers und insbesondere stromab der HVS-Pumpe ein HVS-Absperrventil angeordnet. Das HVS-Absperrventil ist derart ausgebildet, dass dieses in stromlosem Zustand geschlossen ist, d.h. aktiv bestromt werden muss, um geöffnet gehalten zu werden. Dadurch wird insbesondere in Kombination mit dem oben erwähnten HVS-Rückschlagventil im Fehlerfall verhindert, dass der Hochvoltspeicher mit Kühlmittel geflutet wird, in welchem Fall grundsätzlich die Gefahr eines Kurzschlusses besteht. Der Fehlerfall ist beispielsweise ein Crash des Fahrzeugs oder eine Leckage im Hochvoltspeicher, z.B. aufgrund von Materialermüdung. In Kombination mit dem HVS-Rückschlagventil ist der Hochvoltspeicher dann fluidtechnisch betrachtet eingekapselt, nämlich stromauf durch das HVS-Absperrventil und stromab durch das HVS-Rücksch lagventi l.

In einer geeigneten Ausgestaltung ist stromab des ersten Umgebungskühlers, falls vorhanden sogar stromab des zweiten Umgebungskühlers, ein erster Temperatursensor angeordnet, zur Messung der Temperatur des Kühlmittels beim Verlassen des entsprechenden Umgebungskühlers. Weiter ist stromab des Hochvoltspeichers ein zweiter Temperatursensor angeordnet, zur Messung der Temperatur des Kühlmittels beim Verlassen des Hochvoltspeichers. Das Wärmesystem ist vorzugsweise derart ausgebildet, dass der dritte HVS-Kühlbetrieb dann eingestellt wird, wenn die Temperatur des Kühlmittels beim Verlassen des Umgebungskühlers geringer ist als die Temperatur des Kühlmittels beim Verlassen des Hochvoltspeichers, wenn also der erste Temperatursensor eine geringere Temperatur misst als der zweite Temperatursensor. Abhängig von der Temperatur des Kühlmittels beim Verlassen des Umgebungskühlers wird zweckmäßigerweise auch der Chiller aktiviert und insbesondere auch dessen Leistung eingestellt, zur zusätzlichen Wärmeabfuhr in den Kältekreis.

Vorzugsweise ist auf der dritten Verbindungsleitung zwischen dem HVS-Kreis stromab des Chillers und dem Kühlkreis ein Rückschlagventil angeordnet, welches insbesondere im ersten HVS-Heizbetrieb vorteilhaft verhindert, dass der Kühler rückwärts durchströmt wird. Das Rückschlagventil ist insbesondere stromauf des zweiten Stellglieds und vor dessen zweitem Eingang angeordnet.

Zusammenfassend ergeben sich aufgrund der beschriebenen Ausgestaltungen des Wärmesystems insbesondere die folgenden Vorteile, welche je nach konkreter Ausgestaltung einzeln oder in Kombination realisiert sind:
- Das Wärmesystem ermöglicht eine effiziente Innenraumbeheizung mittels der Wärmepumpe durch Nutzung der Abwärme von der Wärmequelle, dem Hochvoltspeicher und ggf. aus der Umgebung.
- Speziell bei hohen Umgebungstemperaturen ist eine bedarfsgerechte und leistungsstarke Kühlung des Hochvoltspeichers mittels des Chiller, also insgesamt mittels der Wärmepumpe möglich.
- Bei demgegenüber geringeren und moderaten Umgebungstemperaturen ist eine bedarfsgerechte und energieeffiziente Kühlung des Hochvoltspeichers mittels des ersten und ggf. auch des zweiten Umgebungskühlers möglich.
- Durch die spezielle Verschaltung der Komponenten des Wärmesystems insbesondere im Gesamtkühlkreis und insbesondere mittels der verschiedenen Stellglieder werden diverse Komponenten mehrfach genutzt, d.h. zur Realisierung unterschiedlicher Betriebsmodi verwendet. Diese Mehrfachnutzung führt zu einer deutlichen Kostenreduktion, da entsprechende Komponenten nicht mehrfach vorhanden sind, sondern in unterschiedlichen Betriebsmodi genutzt werden. Dies betrifft beispielsweise die Wärmepumpe, welche einerseits zur Kühlung des Hochvoltspeichers verwendet wird, andererseits zur Kühlung der Wärmequelle oder zur Kühlung von beiden und zusätzlich hierzu entweder die Wärme an die Umgebung abführt oder zur Innenraumbeheizung nutzt.
- Die spezielle Verschaltung führt auch zu einer verbesserten Sicherheit im Fehlerfall. Insbesondere ist es möglich, den Hochvoltspeicher vor einer Flutung mit Kühlmittel und einem damit einhergehenden Kurzschluss zu schützen ohne dadurch andere Teile des Wärmesystems nachteilig zu beeinflussen.
- Durch die Beheizung des Hochvoltspeichers ergeben sich insbesondere eine verbesserte Fahrdynamik, Effizienz und Schnellladefähigkeit. Dabei ist eine Beheizung des Hochvoltspeichers auf unterschiedliche Arten möglich, nämlich durch einen zusätzlichen HVS-Zuheizer oder durch Abwärme der Wärmequelle oder durch eine gezielte Vertrimmung der Wärmequelle.
- Eine Kühlung des Hochvoltspeichers ist sowohl mittels der Wärmepumpe als auch direkt über die Umgebung möglich, sodass sich eine entsprechende Leitungs- und Effizienzsteigerung ergibt.
- Ein Heizkreis-Zuheizer im Heizkreis zur Innenraumbeheizung kann bei zusätzlich vorhandenem HVS-Zuheizer geringer dimensioniert werden, da die Wärmepumpe auch eine Nutzung des HVS-Zuheizers für die Innenraumbeheizung ermöglicht.
- Das Wärmesystem ist konstruktiv besonders einfach und benötigt zur Realisierung zahlreicher Betriebsmodi besonders wenig Komponenten.
- Beim Umschalten des Wärmesystems zwischen verschiedenen Schaltzuständen oder Betriebsmodi erfolgt keine oder im Wesentlichen keine Strömungsumkehr für das Kühlmittel, sodass das Wärmesystem besonders reaktionsschnell ist und Temperierungsanforderungen in besonders kurzer Zeit bedienbar sind. Zum Umschalten werden besonders wenig Schaltvorgänge benötigt, woraus sich auch entsprechend akustische Vorteile ergeben.
- Durch die Mehrfachnutzung von Komponenten und die spezielle Verschaltung ist das Wärmesystem insgesamt besonders kompakt, wartungsarm, bauraumeffizient und leicht.

Ein erfindungsgemäßes Elektro- oder Hybridfahrzeug weist ein Wärmesystem wie vorstehend beschrieben auf.

Bei dem Verfahren zum Betrieb des Wärmesystems werden je nach Temperierungsanforderung einer der vier Schaltzustände und entsprechend geeignete Betriebsmodi eingestellt. Eine Temperierungsanforderung ist insbesondere eine Kühlanforderung oder eine Heizanforderung. Bei einer Kühlanforderung soll die entsprechende Komponente gekühlt werden, bei einer Heizanforderung entsprechend beheizt.

im Falle einer Heizanforderung für den Hochvoltspeicher wird der erste Schaltzustand eingestellt und in diesem der erste HVS-Heizbetrieb eingestellt, in welchem der Hochvoltspeicher mit Abwärme der Wärmequelle beheizt wird. Für den ersten HVS-Heizbetrieb wird außerdem die HVS-Pumpe im HVS-Kreis aktiviert, um hier Kühlmittel umzuwälzen. Die Kühlkreispumpe im Kühlkreis wird insbesondere deaktiviert.

In einer vorteilhaften Ausgestaltung ist die Wärmequelle eine Komponente eines Antriebsstrangs des Elektro- oder Hybridfahrzeugs und im Falle einer Heizanforderung für den Hochvoltspeicher wird der erste Schaltzustand eingestellt und in diesem zusätzlich ein Vetrimmungsbetrieb eingestellt wird, in welchem die Wärmequelle vertrimmt wird, sodass diese Abwärme erzeugt, mit welcher der Hochvoltspeicher beheizt wird. Der Vetrimmungsbetrieb wird insbesondere dann zusätzlich zum ersten HVS-Heizbetrieb eingestellt, wenn die Abwärme der Wärmequelle nicht zur Beheizung des Hochvoltspeichers ausreicht.

In einer vorteilhaften Ausgestaltung wird im Falle einer Temperierungsanforderung für den Hochvoltspeicher oder einer Kühlanforderung für die Wärmequelle oder beides ein dritter Schaltzustand eingestellt, in welchem der HVS-Kreis und der Kühlkreis voneinander getrennt sind, sodass der Chiller vom Kühlkreis getrennt ist und sodass der erste Umgebungskühler vom HVS-Kreis getrennt ist.

Weiter wird dabei einer der folgenden Betriebsmodi eingestellt, je nachdem welche Temperierungsanforderung konkret vorliegt. Falls für den Hochvoltspeicher eine Kühlanforderung vorliegt, wird ein zweiter HVS-Kühlbetrieb eingestellt, in welchem der Chiller aktiviert wird und Kühlmittel im HVS-Kreis gefördert wird, sodass der Hochvoltspeicher mittels des Chillers gekühlt wird. Falls der Hochvoltspeicher inhomogen temperiert ist, wird ein Homogenisierungsbetrieb eingestellt, in welchem der Chiller deaktiviert wird und Kühlmittel im HVS-Kreis gefördert wird, sodass eine Temperaturspreizung innerhalb des Hochvoltspeichers reduziert wird. Falls eine Heizanforderung für den Hochvoltspeicher vorliegt wird ein zweiter HVS-Heizbetrieb eingestellt, in welchem ein HVS-Zuheizer im HVS-Kreis aktiviert wird und Kühlmittel im HVS-Kreis gefördert wird, sodass der Hochvoltspeicher beheizt wird. Der zweite HVS-Heizbetrieb wird anstelle des ersten HVS-Heizbetriebs vorzugsweise dann gewählt, wenn mittels der Wärmequelle keine Abwärme zur Beheizung des Hochvoltspeichers zur Verfügung steht. Falls eine Kühlanforderung für die Wärmequelle vorliegt, wird ein zweiter Wärmequellen-Kühlbetrieb eingestellt, in welchem Abwärme der Wärmequelle über den Kühlkreis abgeführt wird.

In einer vorteilhaften Ausgestaltung wird im Falle einer Kühlanforderung für den Hochvoltspeicher oder für die Wärmequelle oder beides ein zweiter Schaltzustand eingestellt, in welchem der HVS-Kreis stromauf und stromab des Chillers mit dem Kühlkreis verbunden ist, sodass die Wärmequelle, der Chiller und der erste Umgebungskühler derart in Serie geschaltet sind, dass die Wärmequelle stromauf des Chillers angeordnet ist und der erste Umgebungskühler stromab des Chillers.

Weiter wird dabei einer der folgenden Betriebsmodi eingestellt, je nachdem welche Temperierungsanforderung konkret vorliegt. Falls eine Kühlanforderung für den Hochvoltspeicher vorliegt, wird ein erster HVS-Kühlbetrieb eingestellt, in welchem sowohl im Heizkreis als auch im Kühlkreis Kühlmittel gefördert wird, das Kühlmittel im Kühlkreis gekühlt wird und mit dem Kühlmittel im HVS-Kreis gemischt wird, sodass der Hochvoltspeicher indirekt über den Kühlkreis gekühlt wird. Falls eine Kühlanforderung für die Wärmequelle vorliegt, wird ein erster Wärmequellen-Kühlbetrieb eingestellt, in welchem die Wärmequelle mittels des Chillers gekühlt wird. Der erste Wärmequellen-Kühlbetrieb wird insbesondere dann eingestellt, wenn eine Kühlung der Wärmequelle über den ersten Umgebungsquelle z.B. aufgrund hoher Umgebungstemperaturen nicht ausreichen möglich ist oder falls eine Heizanforderung für den Innenraum des Fahrzeugs vorliegt und die Abwärme der Wärmequelle zur Innenraumbeheizung verwendet wird. Der erste HVS-Kühlbetrieb wird insbesondere dann eingestellt, falls zusätzlich zum ersten Wärmequellen-Kühlbetrieb eine Kühlanforderung für den Hochvoltspeicher vorliegt.

In einer vorteilhaften Ausgestaltung wird im Falle einer Kühlanforderung für den Hochvoltspeicher ein vierter Schaltzustand eingestellt, in welchem der HVS-Kreis stromauf und stromab der Wärmequelle mit dem Kühlkreis derart verbunden ist, dass die Wärmequelle parallel zu dem Hochvoltspeicher und dem Chiller geschaltet ist und dass der Chiller stromauf des ersten Umgebungskühlers und stromab des Hochvoltspeichers angeordnet ist. Weiter wird ein dritter HVS-Kühlbetrieb eingestellt wird, in welchem der Hochvoltspeicher sowohl mittels des Chillers als auch über den Kühlkreis gekühlt wird oder lediglich über den Kühlkreis, falls der Chiller deaktiviert ist. Der dritte HVS-Kühlbetrieb wird insbesondere dann eingestellt, wenn mittels der bisher genannten HVS-Kühlbetriebe keine ausreichende Kühlung des Hochvoltspeichers möglich ist.

Zusätzlich zu den diversen Betriebsmodi zur Temperierung des Hochvoltspeichers und der Wärmequelle wird im Falle einer weiteren Temperierungsanforderung für den Innenraum des Fahrzeugs zusätzlich - wie bereits beschrieben - noch ein entsprechender Klima-Betrieb eingestellt.

Nachfolgend werden Ausführungsbeispiele der Erfindung anhand einer Zeichnung näher erläutert. Darin zeigen jeweils schematisch:
- Fig. 1: ein Wärmesystem,
- Fig. 2: einen Kältekreis des Wärmesystems,
- Fig. 3: eine Variante des Kältekreises,
- Fig. 4: einen ersten Schaltzustand,
- Fig. 5: einen dritten Schaltzustand,
- Fig. 6: einen zweiten Schaltzustand,
- Fig. 7: einen vierten Schaltzustand,
- Fig. 8: einen Gesamtkühlkreis mit abgesperrtem Heizkreis,
- Fig. 9: den Gesamtkühlkreis mit geöffnetem Heizkreis.

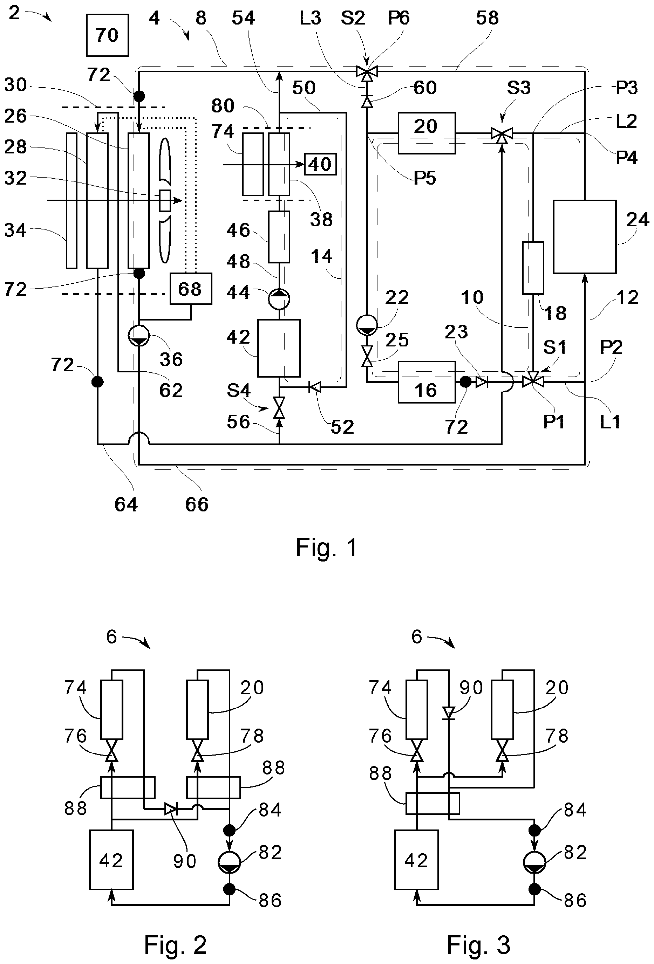

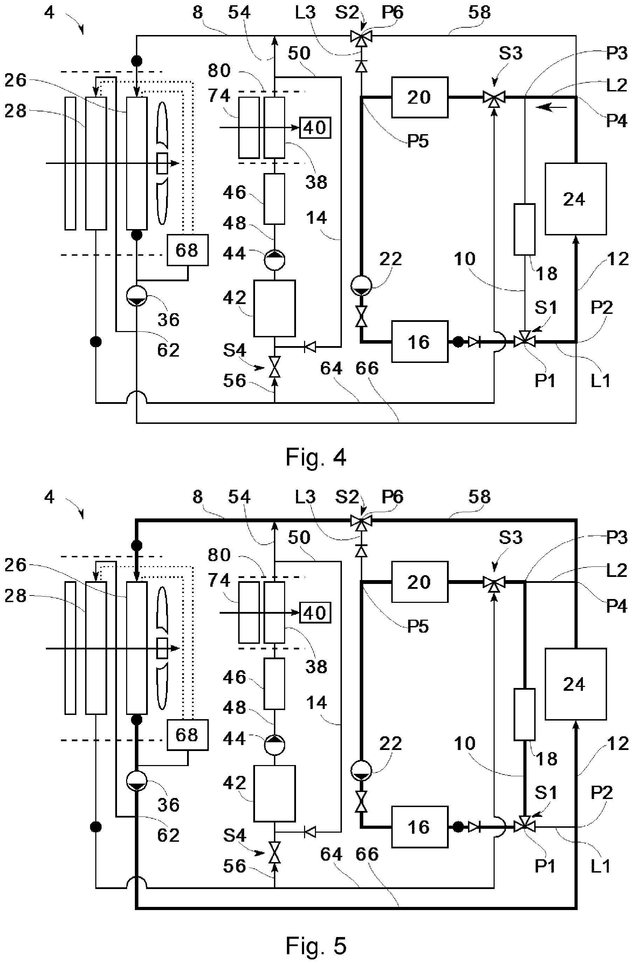

In Fig. 1 ist ein Wärmesystem 2 gezeigt, welches ausgebildet zur Verwendung in einem nicht näher gezeigten Elektro- oder Hybridfahrzeug, welches auch lediglich als Fahrzeug bezeichnet wird. Das Wärmesystem 2 weist einen Gesamtkühlkreis 4 auf sowie einen Kältekreis 6, welcher in Fig. 1 nicht dargestellt ist. Zwei Varianten des Kältekreises 6 sind in den Fig. 2 und 3 gezeigt. Weiter weist das Wärmesystem 2 mehrere Schaltzustände auf, vorliegend vier Stück. Die Fig. 4 bis 7 zeigen jeweils den Gesamtkühlkreis 4 in den diversen Schaltzuständen des Wärmesystems 2. Das Wärmesystem 2 muss aber nicht zwingend die hier gezeigte Kombination von vier Schaltzuständen aufweisen. So sind in einer nicht gezeigten Variante des Wärmesystems 2 nicht alle der hier beschriebenen vier Schaltzustände einstellbar, wodurch sich entsprechende Vereinfachungen ergeben.

Der Gesamtkühlkreis 4 weist in dem gezeigten Ausführungsbeispiel mehrere Kreise 8, 10, 12, 14 auf, nämlich einen Kühlkreis 8, einen HVS-Kreis 10, einen erweiterten HVS-Kreis 12 und einen Heizkreis 14. Die Kreise 8, 10, 12, 14 sind in Fig. 1 zur besseren Sichtbarkeit zusätzlich durch Strichlinien angezeigt. Dabei wird deutlich, dass der erweiterte HVS-Kreis 12 Überlappungen mit dem HVS-Kreis 10 und dem Kühlkreis 8 aufweist. Der Heizkreis 14 kann grundsätzlich auch ausgelassen oder separat realisiert sein, eine Integration in den Gesamtkühlkreis 4 wie z.B. in Fig. 1 ist jedoch vorteilhaft.

An den HVS-Kreis 10 ist ein Hochvoltspeicher 16 angeschlossen, zur Versorgung eines elektrischen Antriebsstrangs des Elektro- oder Hybridfahrzeugs. Weiter ist an den HVS-Kreis 10 ein HVS-Zuheizer 18 angeschlossen, auf welchen in einer nicht gezeigten Variante jedoch verzichtet wird. Weiter ist an den HVS-Kreis 10 ein Chiller 20 angeschlossen, welcher auch an den Kältekreis 6 angeschlossen ist. Im HVS-Kreis 10 ist weiter eine HVS-Pumpe 22 angeordnet, zur Umwälzung von Kühlmittel. Stromab des Hochvoltspeichers ist ein HVS-Rückschlagventil 23 angeordnet. Stromauf des Hochvoltspeichers 16 ist ein HVS-Absperrventil 25 angeordnet, welches in Kombination mit dem HVS-Rückschlagventil 23 den Hochvoltspeicher 16 fluidisch einkapselt.

An den Kühlkreis 8 ist eine Wärmequelle 24 des Fahrzeugs angeschlossen. Die Wärmequelle 24 ist auch an den erweiterten HVS-Kreis 12 angeschlossen. Stromab der Wärmequelle 24 ist ein erster Umgebungskühler 26 an den Kühlkreis 8 angeschlossen, zum Wärmetausch mit der Umgebung. Der erste Umgebungskühler 26 ist im gezeigten Ausführungsbeispiel mit einem zweiten Umgebungskühler 28 zu einem Kühlerpaket kombiniert. Grundsätzlich ist aber auch eine Ausgestaltung ohne den zweiten Umgebungskühler 28 möglich. Beide Umgebungskühler 26, 28 sind hintereinander in einem Umgebungsluftpfad 30 angeordnet, wobei der zweite Umgebungskühler 28 bezüglich des Kühlmittels stromab des ersten Umgebungskühlers 26 angeordnet ist, im Umgebungsluftpfad 30 dagegen stromauf des ersten Umgebungskühlers 26. Im Umgebungsluftpfad 30 stromab der beiden Umgebungskühler 26, 28 ist ein Lüfter 32 angeordnet, zum Ansaugen von Umgebungsluft. Stromauf der beiden Umgebungskühler 26, 28 ist eine Anzahl von Luftklappen 34 angeordnet, zur Steuerung der Zufuhr von Umgebungsluft. Im Kühlkreis 8 ist weiter eine Kühlkreispumpe 36 angeordnet, hier stromab des ersten Umgebungskühlers 26 und stromauf der Wärmequelle 24.

Der Heizkreis 14 dient zur Innenraumklimatisierung. An den Heizkreis 14 ist ein Heizungswärmetauscher 38 angeschlossen, zur Beheizung von Innenraumluft für einen Innenraum 40 des Fahrzeugs. An den Heizkreis 14 ist weiter ein Kondensator 42 angeschlossen, welcher auch an den Kältekreis 6 angeschlossen ist und zusammen mit dem Chiller 20 eine Wärmepumpe bildet, welche ausgebildet ist, in einem Wärmepumpenbetrieb Wärme vom Chiller 20 in den Heizkreis 14 zu übertragen. Im Heizkreis 14 sind weiter eine Heizkreispumpe 44 sowie ein Heizkreis-Zuheizer 46 angeordnet. Im gezeigten Ausführungsbeispiel sind der Kondensator 42, die Heizkreispumpe 44, der Heizkreis-Zuheizer 46 und der Heizungswärmetauscher 38 in der genannten Reihenfolge stromab voneinander auf einem Hauptstrang 48 des Heizkreises 14 angeordnet. Über einen Rückführungsstrang 50 des Heizkreises 14 wird dann der Kreis geschlossen und eine Zirkulation von Kühlmittel ermöglicht. Im Rückführungsstrang 50 ist lediglich ein Rückschlagventil 52 angeordnet. Der Heizkreis 14 ist über einen Heizkreis-Vorlauf 54 und einen Heizkreis-Rücklauf 56 an den Kühlkreis 8 derart angeschlossen, dass der Hauptstrang 48 und die daran angeschlossenen Komponenten in Serie mit dem ersten Umgebungskühler 26 angeordnet ist.

Der HVS-Kreis 10 ist ebenfalls an den Kühlkreis 8 angebunden, nicht jedoch an den Heizkreis 14. Der HVS-Kreis 10 ist stromauf der Wärmequelle 24 mittels einer ersten Verbindungsleitung L1 an den Kühlkreis 8 angeschlossen und stromab der Wärmequelle 24 mittels einer zweiten Verbindungsleitung L2. Dabei ist die erste Verbindungsleitung L1 an einem ersten Anschlusspunkt P1 an den HVS-Kreis 10 angeschlossen und an einem zweiten Anschlusspunkt P2 an den Kühlkreis 8. Die zweite Verbindungsleitung L2 ist an einem dritten Anschlusspunkt P3 an den HVS-Kreis 10 angeschlossen und an einem vierten Anschlusspunkt P4 an den Kühlkreis 8. Der erste Anschlusspunkt P1 und der dritte Anschlusspunkt P3 sind im HVS-Kreis 10 beide stromab des Hochvoltspeichers 16 und stromauf des Chillers 20 angeordnet. Mittels der Verbindungsleitungen L1, L2 ist eine Serienschaltung des Hochvoltspeichers 16 und der Wärmequelle 24 möglich.

Weiter sind vorliegend der HVS-Kreis 10 und der Kühlkreis 8 mittels einer dritten Verbindungsleitung L3 verbunden sind, welche im HVS-Kreis 10 stromab des Chillers 20 und stromauf des Hochvoltspeichers 16 an einem fünften Anschlusspunkt P5 beginnt und an einem sechsten Anschlusspunkt P6 stromab der Wärmequelle 24 und stromauf des ersten Umgebungskühlers 26 in den Kühlkreis 8 mündet. Dadurch ist zwischen dem vierten Anschlusspunkt P4 und dem sechsten Anschlusspunkt P6 ein Leitungsabschnitt des Kühlkreises 8 als ein Chiller-Bypass 58 ausgebildet. Mittels der dritten Verbindungsleitung L3 lässt sich eine Serienschaltung aus Wärmequelle 24, Chiller 20 und erstem Umgebungskühler 26 realisieren. Im vorliegenden Ausführungsbeispiel ist zudem auf der dritten Verbindungsleitung L3 ein Rückschlagventil 60 angeordnet.

Stromab des ersten Umgebungskühlers 26 ist eine Kühlerverzweigung 62 ausgebildet, von welcher ausgehend sich ein NT-Zweig 64 und ein HT-Zweig 66 erstrecken, wobei der HT-Zweig 66 einen Vorlauf für die Wärmequelle 24 bildet und wobei der NT-Zweig 64 stromab des Chillers 20 an den HVS-Kreis 10 angeschlossen ist. An den NT-Zweig 64 ist stromauf dem HVS-Kreis 10 auch der zweite Umgebungskühler 28 angeschlossen. Auf diese Weise ist der Wärmetausch mit der Umgebung deutlich verbessert. Vorliegend ist zudem der Heizkreis 14 über den Heizkreis-Vorlauf 56 an den NT-Zweig 64 angeschlossen. Der NT-Zweig entspricht insbesondere der oben bereits erwähnten vierten Verbindungsleitung. Der HT-Zweig ist insbesondere vollständig ein Teil des Kühlkreises.

Das Wärmesystem 2 weist weiter ein Ausgleichsvolumen 68 für das Kühlmittel auf. Außerdem weist das Wärmesystem 2 zur Steuerung eine Steuereinheit 70 auf. Weiterhin sind im Gesamtkühlkreis 2 an diversen Stellen Temperatursensoren 72 angeschlossen, zur Messung der Temperatur des Kühlmittels.

Zur Innenraumtemperierung weist das Wärmesystem 2 zusätzlich einen Klima-Verdampfer 74 auf, welcher an den Kältekreis 6 angeschlossen ist. Wie in den Fig. 2 und 3 gezeigt ist, ist der Klima-Verdampfer 74 im Kältekreis 6 parallel zum Chiller 20 geschaltet. Zum Einstellen der Kühlleistung des Klima-Verdampfers 74 ist diesem ein selbstregelndes und elektrisch absperrbares Expansionsventil 76 vorgeschaltet. Dem Chiller 20 ist ein Expansionsventil 78 vorgeschaltet. Der Heizungswärmetauscher 38 und der Klima-Verdampfer 74 bilden zusammen ein Klimagerät, mittels welchem der Innenraum 40 sowohl beheizt als auch gekühlt als auch entfeuchtet werden kann. Das Klimagerät weist weiter einen Luftpfad 80 auf, über welchen Luft in den Innenraum 40 gelangt.

In den Varianten der Fig. 2 und 3 weist der Kältekreis 6 einen Verdichter 82 auf, mehrere Verdampfer, nämlich den Klima-Verdampfer 74 und den Chiller 20, sowie den Kondensator 42. Das Expansionsventil 78 vor dem Chiller 20 wird vorliegend abhängig vom Saugdruck des Kältemittels stromauf des Verdichters 82 geregelt. Der Saugdruck wird mittels eines Drucksensors 84 gemessen. Die Überwachung des Verdichters 82 erfolgt in den Fig. 2 und 3 abhängig vom Hochdruck und der Heißgastemperatur stromab des Verdichters 82, welche mittels eines Druck- und Temperatursensors 86 gemessen werden. Eine Regelung des Verdichters 82 erfolgt insbesondere abhängig von einer Kühlanforderung für den Innenraum 40 oder für den Hochvoltspeicher 16, wobei als Regelgröße eine entsprechende Temperatur luftseitig am Klima-Verdampfer 74 bzw. vom Kühlmittel verwendet wird. Der Kältekreis 6 in Fig. 2 weist zusätzlich zwei innere Wärmetauscher 88 auf, je einen für den Klima-Verdampfer 74 und den Chiller 20. In der Variante der Fig. 3 ist lediglich ein innerer Wärmetauscher 88 für beide Verdampfer angeordnet. Stromab des Klima-Verdampfers 74 ist ein Rückschlagventil 90 angeordnet, welches in der Variante der Fig. 2 auch stromauf des inneren Wärmetauschers 88 angeordnet werden kann. In einer nicht gezeigten Variante ist kein innerer Wärmetauscher 88 vorhanden. Weitere Varianten, welche ebenfalls nicht gezeigt sind, ergeben sich durch die Verwendung mehrerer Chiller 20, mehrerer Kondensatoren 42 oder mehrerer, separater Kältekreise 6.

Nachfolgend werden vier Schaltzustände des Wärmesystems 2 anhand der Fig. 4 bis 7 erläutert. Darin ist jeweils einer von vier Schaltzuständen gezeigt. Die Strömungspfade, welche sich jeweils für das Kühlmittel ergeben, sind jeweils durch verstärkte Linien verdeutlicht. In den Fig. 4 bis 7 sind der Übersichtlichkeit halber einige Bezugszeichen ausgelassen, diese ergeben sich aber unmittelbar aus einem Vergleich mit Fig. 1.

Zum Einstellen eines jeweiligen Schaltzustands weist das Wärmesystem 2 ein erstes Stellglied S1, ein zweites Stellglied S2 und ein drittes Stellglied S3 auf, welche im gezeigten Ausführungsbeispiel jeweils als 3/2-Wegeventil ausgebildet sind. Zum zusätzlichen und bedarfsweisen Verbinden und Trennen des Heizkreises 14 vom Kühlkreis 8 unabhängig vom aktuellen Schaltzustand ist weiterhin ein viertes Stellglied S4 angeordnet, welches hier als Absperrventil ausgebildet ist und im Heizkreis-Vorlauf 56 angeordnet ist. In einer nicht gezeigten Variante ist das vierte Stellglied S4 dagegen im Heizkreis-Rücklauf 54 angeordnet.

Ein erster Schaltzustand ist in Fig. 1 gezeigt. Der HVS-Kreis 10 ist stromab und stromauf der Wärmequelle 24 mit dem Kühlkreis 8 verbunden, sodass der erweiterte HVS-Kreis 12 nutzbar ist, in welchem der Hochvoltspeicher 16 und die Wärmequelle 24 in Serie geschaltet sind. Hierzu ist das erste Stellglied S1 in einer ersten Schaltstellung eingestellt, das zweite Stellglied S2 in einer zweiten Schaltstellung und das dritte Stellglied S3 in einer ersten Schaltstellung. Die HVS-Pumpe 22 ist aktiviert. Dadurch lässt sich der Hochvoltspeicher 16 mittels der Wärmequelle 24 beheizen und letztere zugleich auch kühlen.

Insgesamt ist der erste Schaltzustand vorliegend durch eine Serienschaltung von dem Hochvoltspeicher 16, der Wärmequelle 24 und auch dem Chiller 20 gekennzeichnet. Überschüssige Wärme im erweiterten Heizkreis 12 wird z.B. mittels der Chillers 20 an den Kondensator 42 in den Heizkreis 14 übertragen und dort zur Innenraumbeheizung genutzt oder an den ersten Umgebungskühler 26 an die Umgebung abgegeben, je nachdem, ob das vierte Stellglied S4 geöffnet oder geschlossen ist. Die Heizkreispumpe 44 wird hierzu aktiviert. In einer Variante wird die Kühlkreispumpe 36 aktiviert und der erste Umgebungskühler 26 direkt zur Wärmeabfuhr genutzt.

Ein dritter Schaltzustand ist in Fig. 5 gezeigt. Der HVS-Kreis 10 und der Kühlkreis 8 sind hier im Gegensatz zum ersten Schaltzustand voneinander getrennt, sodass der Chiller 20 vom Kühlkreis 8 getrennt ist und sodass der erste Umgebungskühler 26 vom HVS-Kreis 10 getrennt ist. Hierzu ist das erste Stellglied S1 in einer zweiten Schaltstellung eingestellt, das zweite Stellglied S2 in einer ersten Schaltstellung und das dritte Stellglied S3 in dessen erster Schaltstellung. Dadurch sind die Wärmequelle 24 und der Hochvoltspeicher 16 unabhängig voneinander temperierbar. Der dritte Schaltzustand bietet aufgrund der Trennung von HVS-Kreis 10 und Kühlkreis 8 die Möglichkeit, für den Hochvoltspeicher 16 und die Wärmequelle 24 unabhängig voneinander diverse Betriebsmodi auszuwählen und einzustellen. Mögliche Betriebsmodi sind beispielsweise: ein zweiter HVS-Kühlbetrieb, ein Homogenisierungsbetrieb, ein zweiter HVS-Heizbetrieb, zweiter Wärmequellen-Kühlbetrieb. Je nach Betriebsmodus sind die HVS-Pumpe 22 oder die Kühlkreispumpe 44 oder beide aktiviert.

Im zweiten HVS-Kühlbetrieb wird der Chiller 20 aktiviert und Kühlmittel wird mittels der HVS-Pumpe 22 im HVS-Kreis 10 gefördert, sodass der Hochvoltspeicher 16 mittels des Chillers 20 gekühlt wird. Im Homogenisierungsbetrieb wird dagegen der Chiller 20 deaktiviert, aber weiterhin Kühlmittel mittels der HVS-Pumpe 22 gefördert, sodass eine Temperaturspreizung innerhalb des Hochvoltspeichers 16 reduziert wird. Im zweiten HVS-Heizbetrieb wird der HVS-Zuheizer 18 im HVS-Kreis 10 aktiviert und Kühlmittel mittels der HVS-Pumpe 22 gefördert, sodass der Hochvoltspeicher 16 beheizt wird. Zusätzlich ist hierbei eine Wärmeabfuhr in den Heizkreis 14 möglich, indem der Chiller 20 aktiviert wird. Unabhängig von der vorgenannten Temperierung des Hochvoltspeichers 16 wird im zweiten Wärmequellen-Kühlbetrieb Abwärme der Wärmequelle 24 über den Kühlkreis 8 abgeführt und beispielsweise über den ersten Umgebungswärmetauscher 26 an die Umgebung abgegeben.

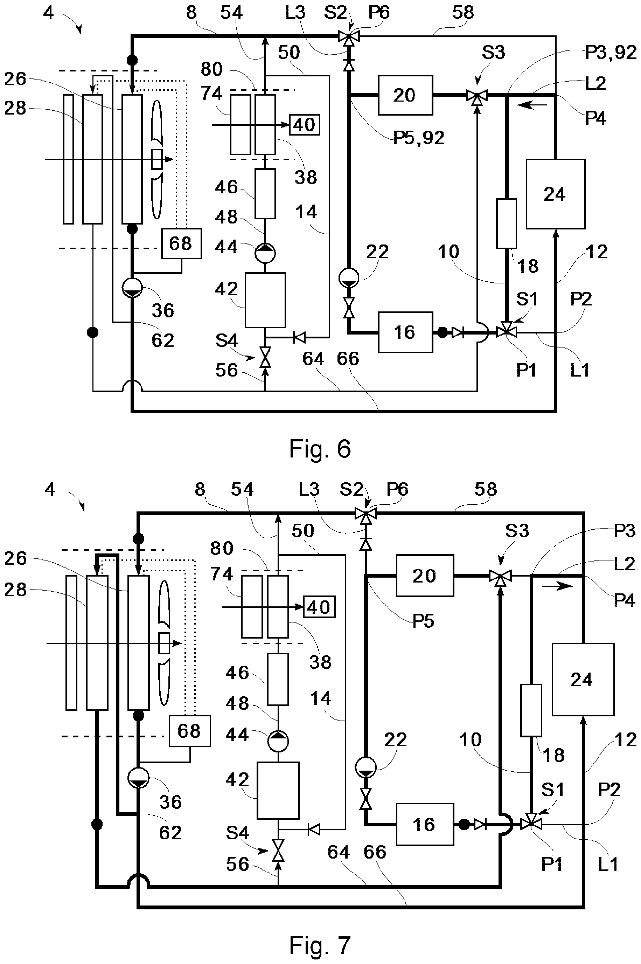

In Fig. 6 ist ein zweiter Schaltzustand gezeigt. Der HVS-Kreis 10 ist stromauf und stromab des Chillers 20 mit dem Kühlkreis 8 verbunden, sodass die Wärmequelle 24, der Chiller 20 und der erste Umgebungskühler 26 derart in Serie geschaltet sind, dass die Wärmequelle 24 stromauf des Chillers 20 angeordnet ist und der erste Umgebungskühler 26 stromab des Chillers 20, zur Kühlung der Wärmequelle 24 über den Chiller 20 oder den ersten Umgebungskühler 26 oder beide. Hierzu ist das erste Stellglied S1 in dessen zweiter Schaltstellung eingestellt, das zweite Stellglied S2 in dessen zweiter Schaltstellung und das dritte Stellglied S3 in dessen erster Schaltstellung. Weiterhin wird im Gegensatz zum ersten und dritten Schaltzustand im zweiten Schaltzustand die dritte Verbindungsleitung L3 genutzt, nicht aber der Chiller-Bypass 58.

Durch Aktivieren der HVS-Pumpe 22 lässt sich auf einfache Weise eine indirekte Kühlung des Hochvoltspeichers 16 mittels des ersten Umgebungskühlers 26 realisieren, obwohl diese beiden Komponenten im zweiten Schaltzustand nicht in Serie geschaltet sind. Hierzu ist stromauf und stromab des Chiller jeweils eine Verzweigung 92 ausgebildet, sodass zwei Teilzweige ausgebildet sind, nämlich ein HVS-Zweig und ein Kühlerzweig. Der HVS-Zweig beginnt an der Verzweigung 92 stromab des Chillers 20, führt über den Hochvoltspeicher 16, den HVS-Zuheizer 18 und schließlich zur Verzweigung 92 stromauf des Chillers 20. Der Kühlerzweig beginnt ebenfalls an der Verzweigung 92 stromab des Chillers 20, führt dann aber über die dritte Verbindungsleitung L3 und das zweite Stellglied S2 zum ersten Umgebungskühler 26 und von dort über die Wärmequelle 24 zur Verzweigung 92 stromauf des Chillers 20. Im gezeigten Ausführungsbeispiel sind die Verzweigungen 92 identisch mit dem dritten bzw. dem fünften Anschlusspunkt P3, P5. An der Verzweigung 92 stromauf des Chillers 20 mischt sich das Kühlmittel aus dem HVS-Zweig und dem dazu parallelen Kühlerzweig, sodass der Hochvoltspeicher 16 mittels des ersten Umgebungskühlers 26 entsprechend gekühlt wird.

Der zweite Schaltzustand ermöglicht somit die folgenden beiden Betriebsmodi: einen ersten Wärmequellen-Kühlbetrieb, in welchem die Wärmequelle 24 mittels des Chillers 20 und ggf. zusätzlich mittels des ersten Umgebungskühlers 26 gekühlt wird, sowie einen ersten HVS-Kühlbetrieb, in welchem zusätzlich zur Kühlkreispumpe 36 die HVS-Pumpe 22 aktiviert wird, sodass der Hochvoltspeicher 16 indirekt über den Kühlkreis 8 gekühlt wird.

In Fig. 7 ist ein vierter Schaltzustand gezeigt. Bei diesem ist der HVS-Kreis 10 stromauf und stromab der Wärmequelle 24 mit dem Kühlkreis 8 derart verbunden, dass die Wärmequelle 24 parallel zu dem Hochvoltspeicher 16 und dem Chiller 20 geschaltet ist. Der Chiller 20 ist dann stromab des ersten Umgebungskühlers 26 und stromauf des Hochvoltspeichers 16 angeordnet. Hierzu ist das erste Stellglied S1 in dessen zweiter Schaltstellung eingestellt, das zweite Stellglied S2 in dessen erster Schaltstellung und das dritte Stellglied S3 in einer zweiten Schaltstellung. Dadurch ist ein dritter HVS-Kühlbetrieb einstellbar, in welchem der Hochvoltspeicher 16 sowohl mittels des Chillers 20 als auch über den Kühlkreis 8 und vorliegend über beide Umgebungskühler 26, 28 gekühlt wird. Gleichzeitig ist auch der zweite Wärmequellen-Kühlbetrieb einstellbar.

Im vierten Schaltzustand wird zur Kühlung des Hochvoltspeichers 16 im Gegensatz zu den anderen drei Schaltzuständen nun auch der zweite Umgebungskühler 28 genutzt, d.h. dem HVS-Kreis 10 wird ausgehend von der Kühlerverzweigung 62 Kühlmittel zugeführt. Ausgehend von der Kühlerverzweigung 62 sind zwei Teilzweige ausgebildet, nämlich ein erster Teilzweig und ein zweiter Teilzweig, auf welche das Kühlmittel entsprechend aufgeteilt wird. Der erste Teilzweig beginnt an der Kühlerverzweigung 62, führt zur Wärmequelle 24 und endet danach im vierten Anschlusspunkt P4. Der zweite Teilzweig beginnt ebenfalls an der Kühlerverzweigung 62, führt aber über den zweiten Umgebungskühler 28 zum dritten Stellglied S3 und von hier in den HVS-Kreis 10, in welchem zuerst der Chiller 20 und danach der Hochvoltspeicher 16 durchlaufen wird. Über das erste Stellglied S1 läuft der zweite Teilzweig dann weiter zum HVS-Zuheizer 18, danach zum dritten Anschlusspunkt P3, von diesem aus über die zweite Verbindungsleitung L2 und endet ebenfalls im vierten Anschlusspunkt P4. Gegenüber dem ersten und zweiten Schaltzustand ist im vierten Schaltzustand die Strömungsrichtung des Kühlmittels auf der zweiten Verbindungsleitung L2 umgekehrt.

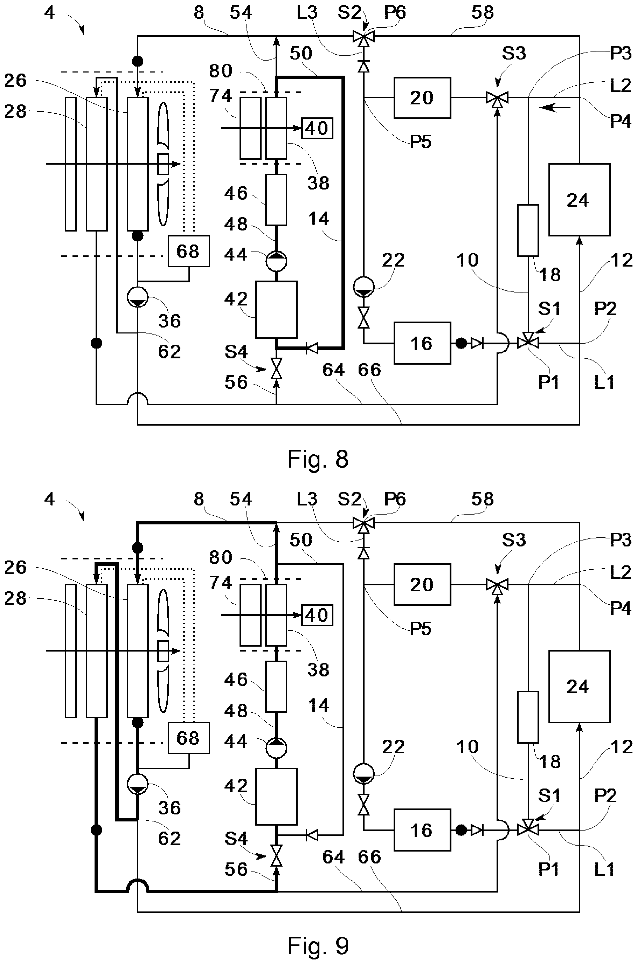

In den Fig. 8 und 9 ist der Betrieb des Heizkreises 14 verdeutlicht. Dabei zeigt Fig. 8 sind zwei Schaltstellungen des vierten Stellglieds S4 gezeigt. In Fig. 8 ist eine erste Schaltstellung des vierten Stellglieds S4 gezeigt, durch welche der Heizkreis 14 vom Kühlkreis 8 getrennt ist. Dadurch ist als ein weiterer Betriebsmodus eine Innenraumbeheizung möglich. Dabei wird entweder Wärme genutzt, welche über die Wärmepumpe in den Heizkreis 14 gelangt, oder der Heizkreis-Zuheizer 46 wird aktiviert, um Wärme zu erzeugen, oder beides. Je nach Schaltzustand wird dann die Abwärme des Hochvoltspeichers 16 oder der Wärmequelle 24 oder von beiden zur Innenraumbeheizung genutzt. Speziell wird in einer Variante mittels des HVS-Zuheizers 18 Wärme erzeugt und mittels der Wärmepumpe in den Heizkreis 14 übertragen und dort zur Innenraumbeheizung verwendet.

Fig. 9 zeigt dagegen eine zweite Schaltstellung des vierten Stellglieds S4, durch welche der Heizkreis 14 mit dem Kühlkreis 8 verbunden ist, im gezeigten Ausführungsbeispiel speziell durch eine Anbindung an den oben beschriebenen zweiten Teilzweig, welcher an der Kühlerverzweigung 62 beginnt und auch den zweiten Umgebungskühler 28 enthält. In dieser Schaltstellung ist es möglich, Wärme, welche von der Wärmepumpe in den Heizkreis 14 gelangt, an die Umgebung abzugeben. Auch ein Mischbetrieb ist möglich.

Zur Innenraumkühlung wird der Klima-Verdampfer 74 aktiviert. Durch Kombination der Innenraumkühlung mit der Innenraumbeheizung ergibt sich dann eine Innenraumentfeuchtung.

### Bezugszeichenliste

- 2: Wärmesystem
- 4: Gesamtkühlkreis
- 6: Kältekreis
- 8: Kühlkreis
- 10: HVS-Kreis
- 12: erweiterter HVS-Kreis
- 14: Heizkreis
- 16: Hochvoltspeicher
- 18: HVS-Zuheizer
- 20: Chiller
- 22: HVS-Pumpe
- 23: HVS-Rückschlagventil
- 24: Wärmequelle
- 25: HVS-Absperrventil
- 26: erster Umgebungskühler
- 28: zweiter Umgebungskühler
- 30: Umgebungsluftpfad
- 32: Lüfter
- 34: Luftklappen
- 36: Kühlkreispumpe
- 38: Heizungswärmetauscher
- 40: Innenraum
- 42: Kondensator
- 44: Heizkreispumpe
- 46: Heizkreis-Zuheizer
- 48: Hauptstrang
- 50: Rückführungsstrang
- 52: Rückschlagventil
- 54: Heizkreis-Vorlauf
- 56: Heizkreis-Rücklauf
- 58: Chiller-Bypass
- 60: Rückschlagventil
- 62: Kühlerverzweigung
- 64: NT-Zweig
- 66: HT-Zweig
- 68: Ausgleichsvolumen
- 70: Steuereinheit
- 72: Temperatursensor
- 74: Klima-Verdampfer
- 76: Expansionsventil
- 78: Expansionsventil
- 80: Luftpfad
- 82: Verdichter
- 84: Drucksensor
- 86: Druck- und Temperatursensor
- 88: innerer Wärmetauscher
- 90: Rückschlagventil
- 92: Verzweigung

- L1: erste Verbindungsleitung
- L2: zweite Verbindungsleitung
- L3: dritte Verbindungsleitung
- P1: erster Anschlusspunkt
- P2: zweiter Anschlusspunkt
- P3: dritter Anschlusspunkt
- P4: vierter Anschlusspunkt
- P5: fünfter Anschlusspunkt
- P6: sechster Anschlusspunkt
- S1: erstes Stellglied
- S2: zweites Stellglied
- S3: drittes Stellglied
- S4: viertes Stellglied

## Patentansprüche

1. Wärmesystem (2) für ein Elektro- oder Hybridfahrzeug, mit einem Gesamtkühlkreis (4), mit einem Kältekreis (6) und mit mehreren Schaltzuständen,
- wobei der Gesamtkühlkreis (4) einen Kühlkreis (8) aufweist, an welchen eine Wärmequelle (24) des Elektro- oder Hybridfahrzeugs angeschlossen ist,
- wobei der Gesamtkühlkreis (4) einen HVS-Kreis (10) aufweist, an welchen ein Hochvoltspeicher (16) angeschlossen ist, zur Versorgung eines elektrischen Antriebsstrangs des Elektro- oder Hybridfahrzeugs,
- wobei an den Kühlkreis (8) stromab der Wärmequelle (24) ein erster Umgebungskühler (26) angeschlossen ist, zum Wärmetausch mit der Umgebung,
- wobei an den HVS-Kreis (10) ein Chiller (20) angeschlossen ist, welcher auch an den Kältekreis (6) angeschlossen ist, zur Wärmeübertragung vom HVS-Kreis (10) in den Kältekreis (6),
- wobei ein erster Schaltzustand einstellbar ist, in welchem der HVS-Kreis (10) stromab und stromauf der Wärmequelle (24) mit dem Kühlkreis (8) verbunden ist, sodass ein erweiterter HVS-Kreis (12) ausgebildet ist, in welchem der Hochvoltspeicher (16) und die Wärmequelle (24) in Serie geschaltet sind, zur Beheizung des Hochvoltspeichers (16) mittels der Wärmequelle (24),
**dadurch gekennzeichnet,**
- **dass** als ein weiterer Schaltzustand ein zweiter Schaltzustand einstellbar ist, in welchem der HVS-Kreis (10) stromauf und stromab des Chillers (20) mit dem Kühlkreis (8) verbunden ist, sodass die Wärmequelle (24), der Chiller (20) und der erste Umgebungskühler (26) derart in Serie geschaltet sind, dass die Wärmequelle (24) stromauf des Chillers (20) angeordnet ist und der erste Umgebungskühler (26) stromab des Chillers (20), zur Kühlung der Wärmequelle (24) über den Chiller (20) oder den ersten Umgebungskühler (26) oder beide.

2. Wärmesystem (2) nach Anspruch 1,
wobei der erste Schaltzustand mittels eines ersten Stellglieds (S1) einstellbar ist, welches im HVS-Kreis (10) stromab des Hochvoltspeichers (16) angeordnet ist und welches zwei Schaltstellungen aufweist, nämlich
- eine erste Schaltstellung, in welcher der HVS-Kreis (10) stromauf der Wärmequelle (24) mit dem Kühlkreis (8) verbunden ist, zur Einstellung des ersten Schaltzustands, und
- eine zweite Schaltstellung, in welcher der HVS-Kreis (10) vom Kühlkreis (8) getrennt ist oder mit diesem stromab der Wärmequelle (24) verbunden ist.

3. Wärmesystem (2) nach Anspruch 1 oder 2,
wobei die Wärmequelle (24) eine Komponente des elektrischen Antriebsstrangs des Elektro- oder Hybridfahrzeugs ist und wobei die Komponente ausgebildet ist, durch eine Vertrimmung zusätzliche Wärme zu erzeugen, zum Beheizen des Hochvoltspeichers (16) im ersten Schaltzustand.

4. Wärmesystem (2) nach einem der Ansprüche 1 bis 3,
wobei als ein weiterer Schaltzustand ein dritter Schaltzustand einstellbar ist, in welchem der HVS-Kreis (10) und der Kühlkreis (8) voneinander getrennt sind, sodass der Chiller (20) vom Kühlkreis (8) getrennt ist und sodass der erste Umgebungskühler (26) vom HVS-Kreis (10) getrennt ist, zur Temperierung der Wärmequelle (24) und des Hochvoltspeichers (16) unabhängig voneinander.

5. Wärmesystem (2) nach einem der Ansprüche 1 bis 4,
wobei stromauf und stromab des Chillers (20) jeweils eine Verzweigung (92) ausgebildet ist, sodass ein HVS-Zweig und ein Kühlerzweig ausgebildet sind, wobei an den HVS-Zweig der Hochvoltspeicher (16) angeschlossen ist und an den Kühlerzweig die Wärmequelle (24) und der erste Umgebungskühler (26) angeschlossen sind,
wobei der HVS-Zweig und der Kühlerzweig im zweiten Schaltzustand zueinander parallel geschaltet sind, zur Kühlung des Hochvoltspeichers (16) mittels des ersten Umgebungskühlers (26) durch Mischung von Kühlmittel aus dem HVS-Zweig und dem Kühlerzweig.

6. Wärmesystem (2) nach einem der Ansprüche 1 bis 5,
wobei in dem Kühlkreis (8) stromauf des ersten Umgebungskühlers (26) ein zweites Stellglied (S2) angeordnet ist, welches zwei Schaltstellungen aufweist, nämlich
- eine erste Schaltstellung, in welcher die Wärmequelle (24) über einen Chiller-Bypass (58) mit dem ersten Umgebungskühler (26) in Serie geschaltet ist, zur Umgehung des Chillers (20), und
- eine zweite Schaltstellung, in welcher der HVS-Kreis (10) stromab des Chillers (20) mit dem Kühlkreis (8) verbunden ist, sodass die Wärmequelle (24), der Chiller (20) und der Umgebungskühler (26) derart in Serie geschaltet sind, dass der Chiller (20) stromauf des ersten Umgebungskühlers (26) und stromab der Wärmequelle (24) angeordnet ist, zur Einstellung des zweiten Schaltzustands.

7. Wärmesystem (2) nach einem der Ansprüche 1 bis 6,
wobei als ein weiterer Schaltzustand ein vierter Schaltzustand einstellbar ist, in welchem der HVS-Kreis (10) stromauf und stromab der Wärmequelle (24) mit dem Kühlkreis (8) derart verbunden ist, dass die Wärmequelle (24) parallel zu dem Hochvoltspeicher (16) und dem Chiller (20) geschaltet ist und dass der Chiller (20) stromab des ersten Umgebungskühlers (26) und stromauf des Hochvoltspeichers (16) angeordnet ist.

8. Wärmesystem (2) nach Anspruch 7,
wobei in dem HVS-Kreis (10) stromauf des Chillers (20) ein drittes Stellglied (S3) angeordnet ist, welches zwei Schaltstellungen aufweist, nämlich
- eine erste Schaltstellung, in welcher der Hochvoltspeicher (16) nicht in Serie mit dem ersten Umgebungskühler (26) geschaltet ist, und
- eine zweite Schaltstellung, in welcher der HVS-Kreis (10) stromauf des Chillers (20) mit dem Kühlkreis (8) verbunden ist, sodass der erste Umgebungskühler (26), der Chiller (20) und der Hochvoltspeicher (16) derart in Serie geschaltet sind, dass der Chiller (20) stromab des ersten Umgebungskühlers (26) und stromauf des Hochvoltspeichers (16) angeordnet ist, zur Einstellung des vierten Schaltzustands.

9. Wärmesystem (2) nach einem der Ansprüche 1 bis 8,
wobei stromab des ersten Umgebungskühlers (26) eine Kühlerverzweigung (62) ausgebildet ist, von welcher ausgehend sich ein NT-Zweig (64) und ein HT-Zweig (66) erstrecken,
wobei der HT-Zweig (66) einen Vorlauf für die Wärmequelle (24) bildet und wobei der NT-Zweig (64) stromab des Chillers (20) an den HVS-Kreis (10) angeschlossen ist,
wobei an den NT-Zweig (64) stromauf des HVS-Kreis (10) ein zweiter Umgebungskühler (28) angeschlossen ist.

10. Wärmesystem (2) nach einem der Ansprüche 1 bis 9,
wobei der Gesamtkühlkreis (8) einen Heizkreis (14) aufweist, an welchen ein Heizungswärmetauscher (38) angeschlossen ist, zur Beheizung von Innenraumluft für das Elektro- oder Hybridfahrzeug, wobei an den Heizkreis (14) ein Kondensator (42) angeschlossen ist, welcher auch an den Kältekreis (6) angeschlossen ist und zusammen mit dem Chiller (20) eine Wärmepumpe bildet, welche ausgebildet ist, in einem Wärmepumpenbetrieb Wärme vom Chiller (20) in den Heizkreis (14) zu übertragen,
wobei der Heizkreis (14) mit dem Kühlkreis (8) derart verbindbar ist, dass der Kondensator (42), der Heizungswärmetauscher (38) und der erste Umgebungskühler (26) in Serie geschaltet sind.

11. Wärmesystem (2) nach Anspruch 10,
wobei der Heizkreis (14) mit dem Kühlkreis (8) über ein viertes Stellglied (S4) verbindbar ist, welches zwei Schaltstellungen aufweist, nämlich
- eine erste Schaltstellung, in welcher der Heizkreis (14) vom Kühlkreis (8) getrennt ist, zur Beheizung der Innenraumluft,
- eine zweite Schaltstellung, in welcher der Heizkreis (14) mit dem Kühlkreis (8) verbunden ist, zur Wärmeabfuhr aus dem Heizkreis (14) in den Kühlkreis (8).

12. Wärmesystem (2) nach einem der Ansprüche 10 oder 11,
wobei im Heizkreis (14) stromab des Kondensators (42) und stromauf des Heizungswärmetauschers (38) ein Heizkreis-Zuheizer (46) angeordnet ist, zur Zufuhr von Zusatzwärme in den Heizkreis (14).

13. Wärmesystem (2) nach einem der Ansprüche 1 bis 12,
wobei im HVS-Kreis (10) stromab des Hochvoltspeichers (16) und stromauf des Chillers (20) ein HVS-Zuheizer (18) angeschlossen ist, zur Zufuhr von Zusatzwärme in den HVS-Kreis (10).

14. Wärmesystem (2) nach einem der Ansprüche 1 bis 13,
wobei im HVS-Kreis (10) stromab des Hochvoltspeichers (16) ein HVS-Rückschlagventil (23) angeordnet ist und stromauf ein HVS-Absperrventil (25), welches in stromlosem Zustand geschlossen ist, zur beidseitigen Absperrung des Hochvoltspeichers (16) in einem Fehlerfall.

15. Elektro- oder Hybridfahrzeug mit einem Wärmesystem (2) gemäß einem der Ansprüche 1 bis 14.

16. Verfahren zum Betrieb eines Wärmesystems (2) gemäß einem der Ansprüche 1 bis 14,
wobei im Falle einer Heizanforderung für den Hochvoltspeicher (16) der erste Schaltzustand eingestellt wird und in diesem ein erster HVS-Heizbetrieb eingestellt wird, für welchen eine HVS-Pumpe (22) im HVS-Kreis (10) aktiviert wird und in welchem der Hochvoltspeicher (16) mit Abwärme der Wärmequelle (24) beheizt wird,
wobei im Falle einer Kühlanforderung für den Hochvoltspeicher (16) oder für die Wärmequelle (24) oder beides der zweite Schaltzustand eingestellt wird, in welchem der HVS-Kreis (10) stromauf und stromab des Chillers (20) mit dem Kühlkreis (8) verbunden ist, sodass die Wärmequelle (24), der Chiller (20) und der erste Umgebungskühler (26) derart in Serie geschaltet sind, dass die Wärmequelle (24) stromauf des Chillers (20) angeordnet ist und der erste Umgebungskühler (26) stromab des Chillers (20),
wobei in dem zweiten Schaltzustand einer der folgenden Betriebsmodi eingestellt wird:
- ein erster HVS-Kühlbetrieb, in welchem sowohl im HVS-Kreis (10) als auch im Kühlkreis (8) Kühlmittel gefördert wird, das Kühlmittel im Kühlkreis (8) gekühlt wird und mit dem Kühlmittel im HVS-Kreis (10) gemischt wird, sodass der Hochvoltspeicher (16) indirekt über den Kühlkreis (8) gekühlt wird,
- ein erster Wärmequellen-Kühlbetrieb, in welchem die Wärmequelle (24) mittels des Chillers (20) gekühlt wird.

17. Verfahren nach Anspruch 16,
wobei die Wärmequelle (24) eine Komponente eines elektrischen Antriebsstrangs des Elektro- oder Hybridfahrzeugs ist,
wobei im Falle einer Heizanforderung für den Hochvoltspeicher (16) der erste Schaltzustand eingestellt wird und in diesem ein Vetrimmungsbetrieb eingestellt wird, in welchem die Wärmequelle (24) vertrimmt wird, sodass diese Abwärme erzeugt, mit welcher der Hochvoltspeicher (16) beheizt wird.

18. Verfahren nach einem der Ansprüche 16 oder 17,
wobei im Falle einer Temperierungsanforderung für den Hochvoltspeicher (16) oder einer Kühlanforderung für die Wärmequelle (24) oder beides ein dritter Schaltzustand eingestellt wird, in welchem der HVS-Kreis (10) und der Kühlkreis (8) voneinander getrennt sind, sodass der Chiller (20) vom Kühlkreis (8) getrennt ist und sodass der erste Umgebungskühler (26) vom HVS-Kreis (10) getrennt ist,
wobei in dem dritten Schaltzustand einer der folgenden Betriebsmodi eingestellt wird:
- ein zweiter HVS-Kühlbetrieb, in welchem der Chiller (20) aktiviert wird und Kühlmittel im HVS-Kreis (10) gefördert wird, sodass der Hochvoltspeicher (16) mittels des Wärmequelle (24) gekühlt wird,
- ein Homogenisierungsbetrieb, in welchem der Chiller (20) deaktiviert wird und Kühlmittel im HVS-Kreis (10) gefördert wird, sodass eine Temperaturspreizung innerhalb des Hochvoltspeichers (16) reduziert wird,
- ein zweiter HVS-Heizbetrieb, in welchem ein HVS-Zuheizer (18) im HVS-Kreis (10) aktiviert wird und Kühlmittel im HVS-Kreis (10) gefördert wird, sodass der Hochvoltspeicher (16) beheizt wird,
- ein zweiter Wärmequellen-Kühlbetrieb, in welchem Abwärme der Wärmequelle (24) über den Kühlkreis (8) abgeführt wird.

19. Verfahren nach einem der Ansprüche 16 bis 18,
wobei im Falle einer Kühlanforderung für den Hochvoltspeicher (16) ein vierter Schaltzustand eingestellt wird, in welchem der HVS-Kreis (10) stromauf und stromab der Wärmequelle (24) mit dem Kühlkreis (8) derart verbunden ist, dass die Wärmequelle (24) parallel zu dem Hochvoltspeicher (16) und dem Chiller (20) geschaltet ist und dass der Chiller (20) stromauf des ersten Umgebungskühlers (26) und stromab des Hochvoltspeichers (16) angeordnet ist,
wobei in dem vierten Schaltzustand ein dritter HVS-Kühlbetrieb eingestellt wird, in welchem der Hochvoltspeicher (16) sowohl mittels des Chillers (20) als auch über den Kühlkreis (8) oder lediglich über den Kühlkreis (8) gekühlt wird.

## Claims

1. Heat system (2) for an electric or hybrid vehicle, having an overall cooling circuit (4), having a refrigeration circuit (6), and having multiple switching states,
- wherein the overall cooling circuit (4) has a cooling circuit (8) to which a heat source (24) of the electric or hybrid vehicle is connected,
- wherein the overall cooling circuit (4) has an HVA circuit (10) to which a high-voltage accumulator (16), for providing a supply to an electrical drive train of the electric or hybrid vehicle, is connected,
- wherein a first surroundings cooler (26), for exchange of heat with the surroundings, is connected to the cooling circuit (8) downstream of the heat source (24),
- wherein a chiller (20), for transfer of heat from the HVA circuit (10) into the refrigerant circuit (6), is connected to the HVA circuit (10), said chiller also being connected to the refrigerant circuit (6),
- wherein it is possible for there to be set a first switching state, in which the HVA circuit (10) is connected to the cooling circuit (8) downstream and upstream of the heat source (24), so that there is formed an extended HVA circuit (12) in which the high-voltage accumulator (16) and the heat source (24) are connected in series, for heating of the high-voltage accumulator (16) by means of the heat source (24),
**characterized**
- **in that** it is possible for there to be set, as a further switching state, a second switching state, in which the HVA circuit (10) is connected to the cooling circuit (8) upstream and downstream of the chiller (20) such that the heat source (24), the chiller (20) and the first surroundings cooler (26) are connected in series in such a way that the heat source (24) is arranged upstream of the chiller (20) and the first surroundings cooler (26) is arranged downstream of the chiller (20), for cooling of the heat source (24) via the chiller (20) or via the first surroundings cooler (26) or both.

2. Heat system (2) according to Claim 1,
wherein the first switching state is settable by means of a first actuator (S1) which is arranged in the HVA circuit (10) downstream of the high-voltage accumulator (16) and which has two switching positions, specifically
- a first switching position, in which the HVA circuit (10) is connected to the cooling circuit (8) upstream of the heat source (24), for setting the first switching state, and
- a second switching position, in which the HVA circuit (10) is separate from the cooling circuit (8) or is connected thereto downstream of the heat source (24).

3. Heat system (2) according to Claim 1 or 2,
wherein the heat source (24) is a component of the electrical drive train of the electric or hybrid vehicle, and wherein the component is configured to generate additional heat by trimming, for heating the high-voltage accumulator (16) in the first switching state.

4. Heat system (2) according to one of Claims 1 to 3, wherein it is possible for there to be set, as a further switching state, a third switching state, in which the HVA circuit (10) and the cooling circuit (8) are separate from one another, so that the chiller (20) is separate from the cooling circuit (8) and so that the first surroundings cooler (26) is separate from the HVA circuit (10), for controlling the temperature of the heat source (24) and of the high-voltage accumulator (16) independently of one another.

5. Heat system (2) according to one of Claims 1 to 4, wherein, upstream and downstream of the chiller (20), a respective branching point (92) is formed, so that an HVA branch and a cooler branch are formed, wherein the high-voltage accumulator (16) is connected to the HVA branch and the heat source (24) and the first surroundings cooler (26) are connected to the cooler branch,
wherein the HVA branch and the cooler branch, in the second switching state, are connected in parallel with one another, for cooling of the high-voltage accumulator (16) by means of the first surroundings cooler (26) by mixing of coolant from the HVA branch and the cooler branch.

6. Heat system (2) according to one of Claims 1 to 5, wherein a second actuator (S2) is arranged in the cooling circuit (8) upstream of the first surroundings cooler (26) and has two switching positions, specifically
- a first switching position, in which the heat source (24) is connected in series with the first surroundings cooler (26) via a chiller bypass (58), for circumventing the chiller (20), and
- a second switching position, in which the HVA circuit (10) is connected to the cooling circuit (8) downstream of the chiller (20) such that the heat source (24), the chiller (20) and the surroundings cooler (26) are connected in series in such a way that the chiller (20) is arranged upstream of the first surroundings cooler (26) and downstream of the heat source (24), for setting the second switching state.

7. Heat system (2) according to one of Claims 1 to 6, wherein it is possible for there to be set, as a further switching state, a fourth switching state, in which the HVA circuit (10) is connected to the cooling circuit (8) upstream and downstream of the heat source (24) in such a way that the heat source (24) is connected in parallel with the high-voltage accumulator (16) and with the chiller (20), and that the chiller (20) is arranged downstream of the first surroundings cooler (26) and upstream of the high-voltage accumulator (16).

8. Heat system (2) according to Claim 7,
wherein a third actuator (S3) is arranged in the HVA circuit (10) upstream of the chiller (20) and has two switching positions, specifically
- a first switching position, in which the high-voltage accumulator (16) is not connected in series with the first surroundings cooler (26), and
- a second switching position, in which the HVA circuit (10) is connected to the cooling circuit (8) upstream of the chiller (20) such that the first surroundings cooler (26), the chiller (20) and the high-voltage accumulator (16) are connected in series in such a way that the chiller (20) is arranged downstream of the first surroundings cooler (26) and upstream of the high-voltage accumulator (16), for setting the fourth switching state.

9. Heat system (2) according to one of Claims 1 to 8, wherein, downstream of the first surroundings cooler (26), there is formed a cooler branching point (62) from which an LT branch (64) and an HT branch (66) extend,
wherein the HT branch (66) forms a feed for the heat source (24), and wherein the LT branch (64) is connected to the HVA circuit (10) downstream of the chiller (20),
wherein a second surroundings cooler (28) is connected to the LT branch (64) upstream of the HVA circuit (10).

10. Heat system (2) according to one of Claims 1 to 9, wherein the overall cooling circuit (8) has a heating circuit (14) to which a heating heat exchanger (38), for heating of interior-compartment air for the electric or hybrid vehicle, is connected,
wherein a condenser (42) is connected to the heating circuit (14), said condenser also being connected to the refrigerant circuit (6) and forming together with the chiller (20) a heat pump, which is configured to transfer heat from the chiller (20) into the heating circuit (14) in a heat-pump operating mode,
wherein the heating circuit (14) is connectable to the cooling circuit (8) in such a way that the condenser (42), the heating heat exchanger (38) and the first surroundings cooler (26) are connected in series.

11. Heat system (2) according to Claim 10,
wherein the heating circuit (14) is connectable to the cooling circuit (8) via a fourth actuator (S4) which has two switching positions, specifically
- a first switching position, in which the heating circuit (14) is separate from the cooling circuit (8), for heating of the interior-compartment air,
- a second switching position, in which the heating circuit (14) is connected to the cooling circuit (8), for removal of heat from the heating circuit (14) into the cooling circuit (8).

12. Heat system (2) according to either of Claims 10 and 11,
wherein a heating-circuit auxiliary heater (46), for feeding of additional heat into the heating circuit (14), is arranged in the heating circuit (14) downstream of the condenser (42) and upstream of the heating heat exchanger (38).

13. Heat system (2) according to one of Claims 1 to 12, wherein an HVA auxiliary heater (18), for feeding of additional heat into the HVA circuit (10), is connected in the HVA circuit (10) downstream of the high-voltage accumulator (16) and upstream of the chiller (20).

14. Heat system (2) according to one of Claims 1 to 13, wherein an HVA check valve (23) is arranged in the HVA circuit (10) downstream of the high-voltage accumulator (16), and an HVA shut-off valve (25), which is closed in the electrically de-energized state, is arranged upstream, for two-sided shut-off of the high-voltage accumulator (16) in the event of a fault.

15. Electric or hybrid vehicle having a heat system (2) according to one of Claims 1 to 14.

16. Method for operating a heat system (2) according to one of Claims 1 to 14,
wherein, in the case of a heating demand for the high-voltage accumulator (16), the first switching state is set and, therein, a first HVA heating operating mode, for which an HVA pump (22) in the HVA circuit (10) is activated and in which the high-voltage accumulator (16) is heated by waste heat of the heat source (24), is set,
wherein, in the case of a cooling demand for the high-voltage accumulator (16) or for the heat source (24) or both, the second switching state is set, in which second switching state the HVA circuit (10) is connected to the cooling circuit (8) upstream and downstream of the chiller (20) such that the heat source (24), the chiller (20) and the first surroundings cooler (26) are arranged in series in such a way that the heat source (24) is arranged upstream of the chiller (20) and the first surroundings cooler (26) is arranged downstream of the chiller (20),
wherein, in the second switching state, one of the following operating modes is set:
- a first HVA cooling operating mode, in which coolant is conveyed both in the HVA circuit (10) and in the cooling circuit (8), and the coolant in the cooling circuit (8) is cooled and is mixed with the coolant in the HVA circuit (10), so that the high-voltage accumulator (16) is cooled indirectly via the cooling circuit (8),
- a first heat-source cooling operating mode, in which the heat source (24) is cooled by means of the chiller (20) .

17. Method according to Claim 16,
wherein the heat source (24) is a component of an electrical drive train of the electric or hybrid vehicle,
wherein, in the case of a heating demand for the high-voltage accumulator (16), the first switching state is set and, therein, a trimming operating mode, in which the heat source (24) is trimmed so as to generate waste heat by which the high-voltage accumulator (16) is heated, is set.

18. Method according to either of Claims 16 and 17,
wherein, in the case of a temperature-control demand for the high-voltage accumulator (16) or a cooling demand for the heat source (24) or both, a third switching state is set, in which third switching state the HVA circuit (10) and the cooling circuit (8) are separate from one another, so that the chiller (20) is separate from the cooling circuit (8) and so that the first surroundings cooler (26) is separate from the HVA circuit (10),
wherein, in the third switching state, one of the following operating modes is set:
- a second HVA cooling operating mode, in which the chiller (20) is activated and coolant is conveyed in the HVA circuit (10), so that the high-voltage accumulator (16) is cooled by means of the heat source (24),
- a homogenization operating mode, in which the chiller (20) is deactivated and coolant is conveyed in the HVA circuit (10), so that a temperature spread withing the high-voltage accumulator (16) is reduced,
- a second HVA heating operating mode, in which an HVA auxiliary heater (18) in the HVA circuit (10) is activated and coolant is conveyed in the HVA circuit (10), so that the high-voltage accumulator (16) is heated,
- a second heat-source cooling operating mode, in which waste heat of the heat source (24) is removed via the cooling circuit (8).

19. Method according to one of Claims 16 to 18,
wherein, in the case of a cooling demand for the high-voltage accumulator (16), a fourth switching state is set, in which fourth switching state the HVA circuit (10) is connected to the cooling circuit (8) upstream and downstream of the heat source (24) in such a way that the heat source (24) is connected in parallel with the high-voltage accumulator (16) and with the chiller (20), and that the chiller (20) is arranged upstream of the first surroundings cooler (26) and downstream of the high-voltage accumulator (16),
wherein, in the fourth switching state, a third HVA cooling operating mode, in which the high-voltage accumulator (16) is cooled both by means of the chiller (20) and via the cooling circuit (8) or only via the cooling circuit (8), is set.

## Revendications

1. Système de chauffage (2) pour un véhicule électrique ou hybride, comportant un circuit de refroidissement complet (4), comportant un circuit frigorifique (6) et comportant plusieurs états de commutation,
- dans lequel le circuit de refroidissement complet (4) présente un circuit de refroidissement (8) auquel est raccordée une source de chaleur (24) du véhicule électrique ou hybride,
- dans lequel le circuit de refroidissement complet (4) présente un circuit d'accumulateur haute tension (10) auquel un accumulateur haute tension (16) est raccordé, pour l'alimentation d'une chaîne cinématique électrique du véhicule électrique ou hybride,
- dans lequel un premier refroidisseur d'environnement (26) est raccordé au circuit de refroidissement (8) en aval de la source de chaleur (24), pour l'échange de chaleur avec l'environnement,
- dans lequel un dispositif de refroidissement (20) est raccordé au circuit d'accumulateur haute tension (10), lequel dispositif de refroidissement est également raccordé au circuit frigorifique (6), pour le transfert de chaleur du circuit d'accumulateur haute tension (10) au circuit frigorifique (6),
- dans lequel un premier état de commutation peut être réglé, dans lequel le circuit d'accumulateur haute tension (10) est relié au circuit de refroidissement (8) en aval et en amont de la source de chaleur (24), de sorte qu'un circuit d'accumulateur haute tension (12) étendu soit réalisé, dans lequel l'accumulateur haute tension (16) et la source de chaleur (24) sont montés en série, pour le chauffage de l'accumulateur haute tension (16) au moyen de la source de chaleur (24),
**caractérisé en ce**
- **qu'**en tant qu'autre état de commutation, un deuxième état de commutation peut être réglé, dans lequel le circuit d'accumulateur haute tension (10) est relié au circuit de refroidissement (8) en aval et en amont du dispositif de refroidissement (20), de sorte que la source de chaleur (24), le dispositif de refroidissement (20) et le premier refroidisseur d'environnement (26) soient montés en série, de telle sorte que la source de chaleur (24) soit disposée en amont du dispositif de refroidissement (20)
et le premier refroidisseur d'environnement (26) en aval du dispositif de refroidissement (20), pour le refroidissement de la source de chaleur (24) par le biais du dispositif de refroidissement (20) ou du premier refroidisseur d'environnement (26) ou des deux.

2. Système de chauffage (2) selon la revendication 1, dans lequel le premier état de commutation peut être réglé au moyen d'un premier organe de réglage (S1), lequel est disposé en aval de l'accumulateur haute tension (16) dans le circuit d'accumulateur haute tension (10) et lequel présente deux positions de commutation, à savoir
- une première position de commutation, dans laquelle le circuit d'accumulateur haute tension (10) est relié au circuit de refroidissement (8) en amont de la source de chaleur (24), pour le réglage du premier état de commutation, et
- une deuxième position de commutation, dans laquelle le circuit d'accumulateur haute tension (10) est séparé du circuit de refroidissement (8) ou relié à celui-ci en aval de la source de chaleur (24).

3. Système de chauffage (2) selon la revendication 1 ou 2,
dans lequel la source de chaleur (24) est un composant de la chaîne cinématique électrique du véhicule électrique ou hybride et dans lequel le composant est réalisé pour générer de la chaleur supplémentaire par un ajustement, pour le chauffage de l'accumulateur haute tension (16) dans le premier état de commutation.

4. Système de chauffage (2) selon l'une des revendications 1 à 3,
dans lequel un troisième état de commutation peut être réglé en tant qu'autre état de commutation, troisième état de commutation dans lequel le circuit d'accumulateur haute tension (10) et le circuit de refroidissement (8) sont séparés l'un de l'autre, de sorte que le dispositif de refroidissement (20) soit séparé du circuit de refroidissement (8) et de sorte que le premier refroidisseur d'environnement (26) soit séparé du circuit d'accumulateur haute tension (10), pour la thermorégulation de la source de chaleur (24) et de l'accumulateur haute tension (16) indépendamment l'un de l'autre.

5. Système de chauffage (2) selon l'une des revendications 1 à 4,
dans lequel une bifurcation (92) est réalisée respectivement en amont et en aval du dispositif de refroidissement (20), de sorte qu'une branche d'accumulateur haute tension et une branche de refroidisseur soient réalisées, l'accumulateur haute tension (16) étant raccordé à la branche d'accumulateur haute tension et la source de chaleur (24) et le premier refroidisseur d'environnement (26) étant raccordés à la branche de refroidisseur,
dans lequel la branche d'accumulateur haute tension et la branche de refroidisseur sont montées en parallèle l'une avec l'autre dans le deuxième état de commutation, pour le refroidissement de l'accumulateur haute tension (16) au moyen du premier refroidisseur d'environnement (26) par mélange de réfrigérant provenant de la branche d'accumulateur haute tension et de la branche de refroidisseur.

6. Système de chauffage (2) selon l'une des revendications 1 à 5,
dans lequel un deuxième organe de réglage (S2) est disposé en amont du premier refroidisseur d'environnement (26) dans le circuit de refroidissement (8), lequel deuxième organe de réglage présente deux positions de commutation, à savoir
- une première position de commutation, dans laquelle la source de chaleur (24) est montée en série avec le premier refroidisseur d'environnement (26) par le biais d'une dérivation de dispositif de refroidissement (58), pour contourner le dispositif de refroidissement (20), et
- une deuxième position de commutation, dans laquelle le circuit d'accumulateur haute tension (10) est relié au circuit de refroidissement (8) en aval du dispositif de refroidissement (20), de sorte que la source de chaleur (24), le dispositif de refroidissement (20) et le refroidisseur d'environnement (26) soient montés en série, de telle sorte que le dispositif de refroidissement (20) soit disposé en amont du premier refroidisseur d'environnement (26) et en aval de la source de chaleur (24), pour le réglage du deuxième état de commutation.

7. Système de chauffage (2) selon l'une des revendications 1 à 6,
dans lequel un quatrième état de commutation peut être réglé en tant qu'autre état de commutation, quatrième état de commutation dans lequel le circuit d'accumulateur haute tension (10) est relié au circuit de refroidissement (8) en amont et en aval de la source de chaleur (24), de telle sorte que la source de chaleur (24) soit montée en parallèle avec l'accumulateur haute tension (16) et le dispositif de refroidissement (20) et que le dispositif de refroidissement (20) soit disposé en aval du premier refroidisseur d'environnement (26) et en amont de l'accumulateur haute tension (16).

8. Système de chauffage (2) selon la revendication 7, dans lequel un troisième organe de réglage (S3) est disposé en amont du dispositif de refroidissement (20) dans le circuit d'accumulateur haute tension (10), lequel troisième organe de réglage présente deux positions de commutation, à savoir
- une première position de commutation, dans laquelle l'accumulateur haute tension (16) n'est pas monté en série avec le premier refroidisseur d'environnement (26), et
- une deuxième position de commutation, dans laquelle le circuit d'accumulateur haute tension (10) est relié au circuit de refroidissement (8) en amont du dispositif de refroidissement (20), de sorte que le premier refroidisseur d'environnement (26), le dispositif de refroidissement (20) et l'accumulateur haute tension (16) soient montés en série, de telle sorte que le dispositif de refroidissement (20) soit disposé en aval du premier refroidisseur d'environnement (26) et en amont de l'accumulateur haute tension (16), pour le réglage du quatrième état de commutation.

9. Système de chauffage (2) selon l'une des revendications 1 à 8,
dans lequel une bifurcation de refroidisseur (62) est réalisée en aval du premier refroidisseur d'environnement (26), bifurcation à partir de laquelle s'étendent une branche basse température (64) et une branche haute température (66),
dans lequel la branche haute température (66) forme une alimentation pour la source de chaleur (24) et dans lequel la branche basse température (64) est raccordée au circuit d'accumulateur haute tension (10) an aval du dispositif de refroidissement (20),
dans lequel un deuxième refroidisseur d'environnement (28) est raccordé à la branche basse température (64) en amont du circuit d'accumulateur haute tension (10).

10. Système de chauffage (2) selon l'une des revendications 1 à 9,
dans lequel le circuit de refroidissement complet (8) présente un circuit de chauffage (14) auquel un échangeur de chaleur de chauffage (38) est raccordé, pour le chauffage de l'air d'espace intérieur pour le véhicule électrique ou hybride, dans lequel un condenseur (42) est raccordé au circuit de chauffage (14), lequel condenseur est également raccordé au circuit frigorifique (6) et forme, conjointement avec le dispositif de refroidissement (20), une pompe à chaleur, laquelle est réalisée pour transférer de la chaleur du dispositif de refroidissement (20) au circuit de chauffage (14) dans un fonctionnement de pompe à chaleur,
dans lequel le circuit de chauffage (14) peut être relié au circuit de refroidissement (8) de telle sorte que le condenseur (42), l'échangeur de chaleur de chauffage (38) et le premier refroidisseur d'environnement (26) soient montés en série.

11. Système de chauffage (2) selon la revendication 10, dans lequel le circuit de chauffage (14) peut être relié au circuit de refroidissement (8) par le biais d'un quatrième organe de réglage (S4), lequel présente deux positions de commutation, à savoir
- une première position de commutation, dans laquelle le circuit de chauffage (14) est séparé du circuit de refroidissement (8), pour le chauffage de l'air d'espace intérieur,
- une deuxième position de commutation, dans laquelle le circuit de chauffage (14) est relié au circuit de refroidissement (8), pour la dissipation de chaleur hors du circuit de chauffage (14) dans le circuit de refroidissement (8).

12. Système de chauffage (2) selon l'une des revendications 10 ou 11,
dans lequel un chauffage auxiliaire de circuit de chauffage (46) est disposé dans le circuit de chauffage (14) en aval du condenseur (42) et en amont de l'échangeur de chaleur de chauffage (38), pour l'apport de chaleur supplémentaire dans le circuit de chauffage (14).

13. Système de chauffage (2) selon l'une des revendications 1 à 12,
dans lequel un chauffage auxiliaire d'accumulateur haute tension (18) est raccordé dans le circuit d'accumulateur haute tension (10) en aval de l'accumulateur haute tension (16) et en amont du dispositif de refroidissement (20), pour l'apport de chaleur supplémentaire dans le circuit d'accumulateur haute tension (10).

14. Système de chauffage (2) selon l'une des revendications 1 à 13,
dans lequel une soupape anti-retour d'accumulateur haute tension (23) est disposée dans le circuit d'accumulateur haute tension (10) en aval de l'accumulateur haute tension (16) et une soupape d'arrêt d'accumulateur haute tension (25) est disposée en amont, laquelle est fermée dans l'état hors tension, pour la coupure bilatérale de l'accumulateur haute tension (16) en cas de défaillance.

15. Véhicule électrique ou hybride comportant un système de chauffage (2) selon l'une des revendications 1 à 14.

16. Procédé de fonctionnement d'un système de chauffage (2) selon l'une des revendications 1 à 14,
dans lequel, dans le cas d'une exigence de chauffage pour l'accumulateur haute tension (16), le premier état de commutation est réglé et, dans celui-ci, un premier fonctionnement de chauffage d'accumulateur haute tension est réglé, pour lequel une pompe d'accumulateur haute tension (22) est activée dans le circuit d'accumulateur haute tension (10) et dans lequel l'accumulateur haute tension (16) est chauffé par la chaleur perdue de la source de chaleur (24),
dans lequel, dans le cas d'une exigence de refroidissement pour l'accumulateur haute tension (16) ou pour la source de chaleur (24) ou les deux, le deuxième état de commutation est réglé, dans lequel le circuit d'accumulateur haute tension (10) est relié au circuit de refroidissement (8) en amont et en aval du dispositif de refroidissement (20), de sorte que la source de chaleur (24), le dispositif de refroidissement (20) et le premier refroidisseur d'environnement (26) soient montés en série, de telle sorte que la source de chaleur (24) soit disposée en amont du dispositif de refroidissement (20) et le premier refroidisseur d'environnement (26) en aval du dispositif de refroidissement (20),
dans lequel, dans le deuxième état de commutation, l'un des modes de fonctionnement suivants est réglé :
- un premier fonctionnement de refroidissement d'accumulateur haute tension, dans lequel du réfrigérant est refoulé à la fois dans le circuit d'accumulateur haute tension (10) et dans le circuit de refroidissement (8), le réfrigérant est refroidi dans le circuit de refroidissement (8) et est mélangé au réfrigérant dans le circuit d'accumulateur haute tension (10), de sorte que l'accumulateur haute tension (16) soit refroidi indirectement par le biais du circuit de refroidissement (8),
- un premier fonctionnement de refroidissement de source de chaleur, dans lequel la source de chaleur (24) est refroidie au moyen du dispositif de refroidissement (20) .

17. Procédé selon la revendication 16,
dans lequel la source de chaleur (24) est un composant d'une chaîne cinématique électrique du véhicule électrique ou hybride,
dans lequel, dans le cas d'une exigence de chauffage pour l'accumulateur haute tension (16), le premier état de commutation est réglé et, dans celui-ci, un fonctionnement d'ajustement est réglé, dans lequel la source de chaleur (24) est ajustée, de sorte que celle-ci génère de la chaleur perdue à l'aide de laquelle l'accumulateur haute tension (16) est chauffé.

18. Procédé selon l'une des revendications 16 ou 17,
dans lequel, dans le cas d'une exigence de thermorégulation pour l'accumulateur haute tension (16) ou d'une exigence de refroidissement pour la source de chaleur (24) ou dans les deux cas, un troisième état de commutation est réglé, dans lequel le circuit d'accumulateur haute tension (10) et le circuit de refroidissement (8) sont séparés l'un de l'autre, de sorte que le dispositif de refroidissement (20) soit séparé du circuit de refroidissement (8) et de sorte que le premier refroidisseur d'environnement (26) soit séparé du circuit d'accumulateur haute tension (10),
dans lequel, dans le troisième état de commutation, l'un des modes de fonctionnement suivants est réglé :
- un deuxième fonctionnement de refroidissement d'accumulateur haute tension, dans lequel le dispositif de refroidissement (20) est activé et le réfrigérant est refoulé dans le circuit d'accumulateur haute tension (10), de sorte que l'accumulateur haute tension (16) soit refroidi au moyen de la source de chaleur (24),
- un fonctionnement d'homogénéisation, dans lequel le dispositif de refroidissement (20) est désactivé et le réfrigérant est refoulé dans le circuit d'accumulateur haute tension (10), de sorte qu'un écart de température à l'intérieur de l'accumulateur haute tension (16) soit réduit,
- un deuxième fonctionnement de chauffage d'accumulateur haute tension, dans lequel un chauffage auxiliaire d'accumulateur haute tension (18) dans le circuit d'accumulateur haute tension (10) est activé et le réfrigérant est refoulé dans le circuit d'accumulateur haute tension (10), de sorte que l'accumulateur haute tension (16) soit chauffé,
- un deuxième fonctionnement de refroidissement de source de chaleur, dans lequel la chaleur perdue de la source de chaleur (24) est dissipée par le biais du circuit de refroidissement (8).

19. Procédé selon l'une des revendications 16 à 18,
dans lequel, dans le cas d'une exigence de refroidissement pour l'accumulateur haute tension (16), un quatrième état de commutation est réglé, dans lequel le circuit d'accumulateur haute tension (10) est relié au circuit de refroidissement (8) en amont et en aval de la source de chaleur (24), de sorte que la source de chaleur (24) soit montée en parallèle avec l'accumulateur haute tension (16) et le dispositif de refroidissement (20), et que le dispositif de refroidissement (20) soit disposé en amont du premier refroidisseur d'environnement (26) et en aval de l'accumulateur haute tension (16),
dans lequel, dans le quatrième état de commutation, un troisième fonctionnement de refroidissement d'accumulateur haute tension est réglé, dans lequel l'accumulateur haute tension (16) est refroidi à la fois au moyen du dispositif de refroidissement (20) et par le biais du circuit de refroidissement (8) ou seulement par le biais du circuit de refroidissement (8).
